(19) **Europäisches Patentamt / European Patent Office / Office européen des brevets**

(11) **EP 4 254 861 A1**

(12) # EUROPEAN PATENT APPLICATION
published in accordance with Art. 153(4) EPC

(43) Date of publication:
04.10.2023 Bulletin 2023/40

(21) Application number: 20966521.5

(22) Date of filing: 24.12.2020

(51) International Patent Classification (IPC):
**H04L 9/40** (2022.01)

(52) Cooperative Patent Classification (CPC):
**H04W 12/041; H04W 12/069; H04W 12/50**

(86) International application number:
**PCT/CN2020/139154**

(87) International publication number:
**WO 2022/133949 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **LI, Yong**
  **Shenzhen, Guangdong 518129 (CN)**
• **WANG, Yong**
  **Shenzhen, Guangdong 518129 (CN)**
• **CHEN, Jing**
  **Shenzhen, Guangdong 518129 (CN)**

(74) Representative: **Maiwald GmbH**
**Engineering**
**Elisenhof**
**Elisenstrasse 3**
**80335 München (DE)**

(54) ## SECURE ACCESS METHOD AND DEVICE

(57) Embodiments of this application provide a secure access method and an apparatus, applied to the field of communications technologies and the field of connected vehicles. The method includes: receiving a first message from a second node, where the first message includes a first ciphertext, and the first ciphertext is obtained based on a security parameter and a first key negotiation parameter; decrypting the first ciphertext based on the security parameter to obtain the first key negotiation parameter; determining a first shared key based on the first key negotiation parameter and a key negotiation algorithm; and obtaining first identity authentication information based on the first shared key and a PSK between a first node and the second node, where the first identity authentication information is used to authenticate an identity of the first node. According to the embodiments of this application, a node can be prevented from being successfully associated with an attacker having an untrusted identity. The solution can be further used to improve a capability of autonomous driving or an advanced driver assistance system ADAS, and can be applied to fields such as vehicle to everything V2X, long term evolution-vehicle LTE-V, and vehicle to vehicle V2V.

FIG. 5

**Description**

**TECHNICAL FIELD**

This application relates to the field of communications technologies and the field of connected vehicles, in particular, to the field of short-range communications technologies, for example, cockpit domain communications, and specifically, to a secure access method and an apparatus.

**BACKGROUND**

Nowadays, with rapid development of informatization, mobile terminals, mobile phones, tablets, or other portable intelligent terminals are important personal intelligent tools that are indispensable to people. While enjoying convenience brought by informatization, people also face threats of security vulnerabilities and privacy leakage. An intelligent vehicle is used as an example. As vehicle communication is widely applied, wireless communication also brings a series of security risks to the vehicle. For example, by using an existing short-range communications technology, a hacker may intrude into an in-vehicle information system to obtain vehicle information, or even remotely control a vehicle, and this poses a very high threat to user privacy and vehicle security.

To ensure communication security, before two nodes (referred to as the first node and the second node for ease of description) communicate with each other, the second node accesses the first node in a pairing mode, or directly accesses the first node in an open mode. When accessing the first node, the second node usually first determines a shared key used for communication encryption by both parties. However, in an existing access process, confidentiality of the generated shared key is relatively low. For example, when a Bluetooth headset accesses a mobile phone, a link key (link key) may be generated by directly tapping a name of the Bluetooth headset in the mobile phone, and then the Bluetooth headset is successfully associated with the mobile phone. Subsequently, data may be sent and received between the mobile phone as the first node and the Bluetooth headset. Apparently, this access mode is likely to cause data leakage and threaten user privacy and security. For a communications system, and especially for an in-vehicle communications system, in this case, a vehicle is easily accessed by an untrusted node, and the vehicle communicates with an attacker having an untrusted identity, hence endangering personal safety of a driver and a passenger.

Therefore, how to avoid access of untrusted attackers and improve security of node communication is a technical problem that is being studied by persons skilled in the art.

**SUMMARY**

Embodiments of this application disclose a secure access method and an apparatus, and provide a highly secure authentication and key negotiation method, to prevent a node from being successfully associated with an attacker having an untrusted identity.

According to a first aspect, an embodiment of this application discloses a secure access method, including:

receiving a first message from a second node, where the first message includes a first ciphertext, the first ciphertext is obtained based on a security parameter and a first key negotiation parameter, the security parameter is a pre-shared key PSK between a first node and the second node or is a first password, the first password is an agreed access password between the first node and the second node, the PSK between the first node and the second node is a secret value shared between the first node and the second node, and the first password may be considered as a password used by the second node to access the first node;

decrypting the first ciphertext based on the security parameter to obtain the first key negotiation parameter; and

determining a first shared key based on the first key negotiation parameter and a key negotiation algorithm.

In this embodiment of this application, the second node encrypts the first key negotiation parameter based on the security parameter (the security parameter may be the PSK or the first password) to obtain the first ciphertext. Because the same security parameter is preconfigured for the first node or the first node can obtain the same security parameter, the first node can decrypt the first ciphertext to obtain the first key negotiation parameter, and can subsequently generate the shared key based on the first key negotiation parameter. Without obtaining the security parameter, the shared key cannot be generated, and the second node cannot access the first node. Therefore, an attacker can be prevented from accessing the first node by using the second node, and the first node can be prevented from being successfully associated with an attacker having an untrusted identity.

In a possible implementation of the first aspect, the method further includes:

obtaining the PSK between the first node and the second node; and

obtaining first identity authentication information based on the first shared key and the PSK between the first node and the second node, where the first identity authentication information is used to authenticate an identity of the first node.

The first identity authentication information is obtained based on the first shared key and the PSK, and the first identity authentication information may be used to authenticate the identity of the first node. In this application, a method for authenticating the identity of the first node by using the first identity information is illustrated: The second node determines a first shared key, and generates check information based on the first shared key and a PSK. If the check information is the same as the first identity authentication information, it indicates that the first shared key and the PSK on the first node are the same as those on the second node. In this way, the identity of the first node can be authenticated, communication between the node and an attacker is prevented, and security of the node is improved.

In another possible implementation of the first aspect, the obtaining the PSK between the first node and the second node includes:

obtaining the PSK between the first node and the second node based on a first correspondence; or
determining the PSK between the first node and the second node based on the first password, the first shared key, a first random number, and a second random number, where the first message further includes the first random number.

It can be learned that the first node may store a correspondence between the PSK and the second node in a form of a correspondence. Therefore, the PSK between the first node and the second node can be obtained based on the correspondence.

In a possible design, the PSK is determined based on the first password, the first shared key, the first random number, and the second random number. If the first node is associated with the second node for the first time or the first node has not obtained the first correspondence, the first node does not have the PSK corresponding to the second node, and therefore a new PSK may be determined.

In still another possible implementation of the first aspect, the determining the PSK between the first node and the second node based on the first password, the first shared key, a first random number, and a second random number includes:

determining a second shared key based on the first shared key, the first random number, and the second random number; and
determining the PSK between the first node and the second node based on the first password, the second shared key, the first random number, and the second random number.

In still another possible implementation of the first aspect, the first ciphertext is obtained based on a hash value of the security parameter and the first key negotiation parameter; and the decrypting the first ciphertext based on the first password to obtain the first key negotiation parameter includes:
decrypting the first ciphertext based on the hash value of the security parameter to obtain the first key negotiation parameter.

In still another possible implementation of the first aspect, the first ciphertext is obtained by performing an elliptic curve point addition operation based on the hash value of the security parameter and the first key negotiation parameter; and the decrypting the first ciphertext based on the first password to obtain the first key negotiation parameter includes:
obtaining the first key negotiation parameter by performing an elliptic curve point subtraction operation based on the hash value of the security parameter and the first ciphertext.

In still another possible implementation of the first aspect, the decrypting the first ciphertext based on the security parameter to obtain the first key negotiation parameter includes:

determining a first intermediate key based on the hash value of the security parameter and the first random number; and
decrypting the first ciphertext based on the first intermediate key to obtain the first key negotiation parameter.

In still another possible implementation of the first aspect, the obtaining first identity authentication information based on the first shared key and the PSK between the first node and the second node further includes:

deriving a first key based on the first shared key, the PSK, the first random number, and the second random number; and
generating the first identity authentication information based on the first key, the first random number, and the second random number, where the first identity authentication information is used to authenticate the identity of the first node.

In still another possible implementation of the first aspect, the method further includes:

encrypting a second key negotiation parameter based on the security parameter to obtain a second ciphertext; and sending a second message to the second node, where the second message includes the first identity authentication information and the second ciphertext, and the second ciphertext is used by the second node to determine the first shared key.

The second key negotiation parameter is used by the second node to determine the shared key. It can be learned that the second key negotiation parameter may be encrypted based on the security parameter and that the second key negotiation parameter can be decrypted to generate the shared key only after the security parameter is cracked. This prevents an attacker from masquerading as the second node to access the first node, and ensures security of a key negotiation process.

In still another possible implementation of the first aspect, the method further includes:

receiving a third message from the second node, where the third message includes second identity authentication information; and
determining, based on the PSK between the first node and the second node, the first shared key, and the second identity authentication information, that identity authentication of the second node succeeds.

The foregoing describes a method for authenticating an identity of the second node. The second identity authentication information is generated by the second node based on the PSK and the first shared key. Therefore, it can be determined, based on the PSK, the first shared key, and the second identity authentication information, whether the first shared key and the PSK on the second node are the same as those on the first node, so that the identity of the second node can be authenticated.

In still another possible implementation of the first aspect, the first message may also be referred to as an access request message (or an association request message). Further, the second message may also be referred to as a security context request message (or an identity authentication request message). The third message may also be referred to as a security context response message (or an identity authentication response message).

In still another possible implementation of the first aspect, the method further includes:
sending a fourth message to the second node, where the fourth message is used to indicate that access succeeds, or used to indicate that the association is complete. Further, the fourth message may be referred to as an association establishment message (or an access association complete message), an association complete message, or the like.

According to a second aspect, an embodiment of this application discloses a secure access method, including:

sending a first message to a first node, where the first message includes a first ciphertext, the first ciphertext is obtained based on a security parameter and a first key negotiation parameter, the security parameter is a pre-shared key PSK between the first node and a second node or is a first password, and the first password is an agreed access password between the first node and the second node;
receiving a second message from the first node, where the second message includes a second ciphertext, and the second ciphertext is obtained by encrypting a second key negotiation parameter based on the security parameter;
decrypting the second ciphertext based on the security parameter to obtain the second key negotiation parameter;
determining a first shared key based on the second key negotiation parameter and a key negotiation algorithm; and
obtaining second identity authentication information based on the first shared key and the PSK between the first node and the second node, where the second identity authentication information is used to authenticate an identity of the second node.

In this embodiment of this application, the first key negotiation parameter is encrypted based on the security parameter (the security parameter may be the PSK or the first password) and then sent to the first node. Correspondingly, the first node also encrypts the second key negotiation parameter based on the security parameter. The two communication parties may decrypt the ciphertext based on the security parameter, and generate the shared key based on the key negotiation parameter. Without obtaining the security parameter, the shared key cannot be generated, and the second node cannot access the first node. Therefore, the second node can be prevented from accessing the first node that is untrusted, and security of the second node is improved.

In a possible implementation of the second aspect, before the obtaining second identity authentication information based on the first shared key and the PSK between the first node and the second node, the method further includes: obtaining the PSK between the first node and the second node.

In another possible implementation of the second aspect, the obtaining the PSK between the first node and the second node includes:

> obtaining the PSK between the first node and the second node based on a second correspondence; or
> determining the PSK between the first node and the second node based on the first password, the first shared key, a first random number, and a second random number, where the first message further includes the first random number, and the first message includes the first random number.

It can be learned that a correspondence between the PSK and the first node may be stored in a form of a correspondence. Therefore, the PSK between the first node and the second node can be obtained based on the correspondence.

In a possible design, the PSK is determined based on the first password, the first shared key, the first random number, and the second random number. If the first node is associated with the second node for the first time or the first node has not obtained the first correspondence, the second node does not have the PSK corresponding to the first node, and therefore a new PSK can be determined in the foregoing manner.

In still another possible implementation of the second aspect, the determining the PSK between the first node and the second node based on the first password, the first shared key, a first random number, and a second random number includes:

> determining a second shared key based on the first shared key, the first random number, and the second random number; and
> determining the PSK between the first node and the second node based on the first password, the second shared key, the first random number, and the second random number.

In still another possible implementation of the second aspect, before the sending a first message, the method further includes:
encrypting the first key negotiation parameter based on the security parameter to obtain the first ciphertext.

In still another possible implementation of the second aspect, the encrypting the first key negotiation parameter based on the security parameter to obtain the first ciphertext includes:

> encrypting the first key negotiation parameter based on a hash value of the security parameter to obtain the first ciphertext; or
> obtaining the first ciphertext by performing an elliptic curve point addition operation based on a hash value of the security parameter and the first key negotiation parameter; or
> determining a first intermediate key based on a hash value of the security parameter and the first random number; and encrypting the first key negotiation parameter based on the first intermediate key to obtain the first ciphertext.

In still another possible implementation of the second aspect, the obtaining second identity authentication information based on the first shared key and the PSK between the first node and the second node further includes:

> deriving a first key based on the first shared key, the PSK, the first random number, and the second random number; and
> generating the second identity authentication information based on the first key, the first random number, and the second random number, where the first identity authentication information is used to authenticate the identity of the first node.

In still another possible implementation of the second aspect, the second message further includes first identity authentication information; and the method further includes:
determining, based on the PSK between the first node and the second node, the first shared key, and the first identity authentication information, that identity authentication of the first node succeeds.

The foregoing describes a method for authenticating an identity of the first node. The first identity authentication information is generated by the first node based on the PSK and the first shared key. Therefore, it can be determined, based on the PSK, the first shared key, and the first identity authentication information, whether the first shared key and the PSK on the first node are the same as those on the second node, so that the identity of the first node can be authenticated. It should be noted that an occasion for authenticating the identity of the first node may be periodic or aperiodic, or the identity of the first node may be authenticated before some important operations are performed, which depends on implementation in specific implementation.

In still another possible implementation of the second aspect, the first message may also be referred to as an access request message (or an association request message). Further, the second message may also be referred to as a security context request message (or an identity authentication request message). The third message may also be referred to as a security context response message (or an identity authentication response message).

In still another possible implementation of the second aspect, the method further includes: receiving a fourth message from the first node, where the fourth message is used to indicate that access succeeds, or used to indicate that the association is complete. Further, the fourth message may be referred to as an association establishment message (or an access association complete message), an association complete message, or the like.

According to a third aspect, an embodiment of this application discloses a communications apparatus. The communications apparatus includes a receiving unit and a processing unit. The communications apparatus is configured to implement the secure access method described in any one of the first aspect or the possible implementations of the first aspect.

According to a fourth aspect, an embodiment of this application discloses a communications apparatus, including a sending unit, a receiving unit, and a processing unit. The communications apparatus is configured to implement the secure access method described in any one of the second aspect or the possible implementations of the second aspect.

According to a fifth aspect, an embodiment of this application discloses a communications apparatus, including a processor and a communications interface. The processor is configured to invoke a computer program stored in a memory, to implement the method described in any one of the first aspect or the possible implementations of the first aspect.

According to a sixth aspect, an embodiment of this application discloses a communications apparatus, including a processor and a communications interface. The processor is configured to invoke a computer program stored in a memory, to implement any one of the first aspect or the possible implementations of the first aspect.

According to a seventh aspect, an embodiment of this application further provides a chip system. The chip system includes at least one processor and a communications interface. The communications interface is configured to send and/or receive data, and the at least one processor is configured to invoke a computer program stored in at least one memory, so that the chip system implements the method described in any one of the first aspect or the possible implementations of the first aspect or implements the method described in any one of the second aspect or the possible implementations of the second aspect.

According to an eighth aspect, an embodiment of this application further provides a communications system, including a first node and a second node. The first node includes the communications apparatus described in any one of the third aspect or the possible implementations of the third aspect, or includes the communications apparatus described in any one of the fifth aspect or the possible implementations of the fifth aspect. The second node includes the communications apparatus described in any one of the fourth aspect or the possible implementations of the fourth aspect, or includes the communications apparatus described in any one of the sixth aspect or the possible implementations of the sixth aspect.

According to a ninth aspect, an embodiment of this application discloses a computer-readable storage medium. The computer-readable storage medium stores a computer program. When the computer program is run on a computer, the computer is enabled to perform the method described in any one of the first aspect or the possible implementations of the first aspect, or perform the method described in any one of the second aspect or the possible implementations of the second aspect.

According to a tenth aspect, an embodiment of this application discloses a computer program product. When the computer program product is run on one or more processors, the method described in any one of the first aspect or the possible implementations of the first aspect is performed, or the method described in any one of the second aspect or the possible implementations of the second aspect is performed.

According to an eleventh aspect, an embodiment of this application discloses a terminal. The terminal may be an intelligent cockpit product, a vehicle, or the like, and the terminal includes a first node and/or a second node. The second node (for example, one or more of modules such as a camera, a screen, a microphone, a speaker, a radar, an electronic key, a passive entry passive start system controller, and user equipment UE) includes the apparatus described in any one of the third aspect or the possible implementations of the third aspect. The first node (for example, a base station or a vehicle cockpit domain controller CDC) includes the communications apparatus described in any one of the fourth aspect or the possible implementations of the fourth aspect.

Alternatively, the vehicle may be replaced with an intelligent terminal or a transportation vehicle such as an unmanned aerial vehicle or a robot.

## BRIEF DESCRIPTION OF DRAWINGS

The following describes accompanying drawings used in embodiments of this application.

FIG. 1 is a schematic diagram of a key negotiation algorithm;

FIG. 2(a), FIG. 2(b), and FIG. 2(c) are schematic diagrams of use scenarios of a key negotiation algorithm;

FIG. 3 is a schematic flowchart of a communications system according to an embodiment of this application;

FIG. 4 is a schematic diagram of a communication scenario according to an embodiment of this application;

FIG. 5 is a schematic flowchart of a communication method according to an embodiment of this application;

FIG. 6 is a schematic flowchart for determining a shared key according to an embodiment of this application;

FIG. 7 is a schematic flowchart of another communication method according to an embodiment of this application;

FIG. 8A and FIG. 8B are a schematic flowchart of still another communication method according to an embodiment of this application;

FIG. 9A to FIG. 9E are a schematic diagram of an operational scenario of a communication method according to an embodiment of this application;

FIG. 10 is a schematic diagram of a structure of a communications apparatus according to an embodiment of this application;

FIG. 11 is a schematic diagram of a structure of another communications apparatus according to an embodiment of this application; and

FIG. 12 is a schematic diagram of a structure of still another communications apparatus according to an embodiment of this application.

## DESCRIPTION OF EMBODIMENTS

The following describes the embodiments of this application with reference to the accompanying drawings in the embodiments of this application. It should be noted that, in this application, terms such as "an example" or "for example" are used to represent an example, an instance, or an illustration. Any embodiment or design scheme described as "an example" or "for example" in this application should not be construed as being more preferred or advantageous than other embodiments or design schemes. Exactly, use of the term such as "example" or "for example" is intended to present a relative concept in a specific manner.

In the embodiments of this application, the term "at least one" indicates one or more, and the term "a plurality of" indicates two or more. The term "at least one of the following items (pieces)" or an expression similar to the term indicates any combination of the items, and includes a single item (piece) or any combination of a plurality of items (pieces). For example, at least one item (piece) of a, b, and c may indicate: a, b, c, (a and b), (a and c), (b and c), or (a, b, and c), where a, b, and c may be singular or plural. The term "and/or" describes an association relationship between associated objects and represents that three relationships may exist. For example, A and/or B may represent the following three cases: Only A exists, both A and B exist, and only B exists, where A and B may be singular or plural. The character "/" generally indicates an "or" relationship between associated objects.

In addition, unless otherwise specified, ordinal numbers such as "first" and "second" used in the embodiments of this application are used to distinguish between a plurality of objects, and are not intended to limit an order, a time sequence, priorities, or importance of the plurality of objects. For example, first information and second information are merely used to distinguish between different information, but do not indicate that the two types of information are different in content, priorities, sending sequences, importance, or the like.

The following first describes technical terms used in the embodiments of this application.

1. Node (node)

A node is an electronic device capable of processing, sending, and receiving data, or is a component (for example, a chip or an integrated circuit) in the electronic device. The electronic device may include a terminal device or a network-side device. For example, the node may be a cockpit domain (cockpit domain) device, or a module (for example, one or more of modules such as a cockpit domain controller (cockpit domain controller, CDC), a camera, a screen, a microphone, a speaker, an electronic key, and a passive entry passive start system controller) in the cockpit domain device. In a specific implementation process, the node may alternatively be a data relay device, for example, a base station, a router, a repeater, a bridge, or a switch; or may be a terminal device, for example, various types of user equipment (user equipment, UE), a mobile phone (mobile phone), a tablet computer (pad), a desktop computer, an earphone, and a stereo; or may further include a machine intelligent device, for example, a self-driving (self-driving) device, a transportation safety (transportation safety) device, a smart home device (for example, one or more of an audio and video device, a security device, a smart lighting device, and an environment monitoring device), a virtual reality (virtual reality, VR) terminal device, an augmented reality (augmented reality, AR) terminal device, a machine type communication (machine type communication, MTC) device, an industrial control (industrial control) device, a remote medical (remote medical) device, a smart grid (smart grid) device, or a smart city (smart city) device; or may further include a wearable device (for example, a smart watch, a smart band, or a pedometer), or the like.

In some technical scenarios, a device with similar data receiving and sending capabilities may not be referred to as a node. However, for ease of description, electronic devices with data receiving and sending capabilities are collectively referred to as nodes in the embodiments of this application.

2. Security algorithm (cryptographic algorithm)

(1) Hash algorithm

A hash algorithm is also referred to as a hash (hash) function or a hash algorithm. The hash algorithm may output a segment of data (for example, a character string, a number, or a file) as a hash value (the hash value may also be referred to as a hash value or a digest value) of a preset length (for example, 80 bits or 128 bits), and it is very difficult to find a reverse law. Common hash algorithms mainly include a secure hash algorithm (secure hash algorithm 1, SHA-1), a message digest (message digest, MD) algorithm (such as MD2, MD4, or MD5), and the like.

(2) Encryption (encryption) algorithm

An encryption algorithm is used to protect data confidentiality (confidentiality), and usually represented as encrypting a plaintext to obtain a ciphertext. The encryption algorithm may include an encryption operation (for example, an elliptic point addition operation or an exclusive OR operation), and may also include various mathematical functions with relatively high security. Common encryption algorithms mainly include the exclusive OR operation, a data encryption standard (data encryption standard, DES), a triple data encryption algorithm (triple data encryption algorithm, 3DES), an advanced encryption standard (advanced encryption standard, AES), an RSA encryption algorithm, a data structure analysis (data structure analysis, DSA) algorithm, and the like.

(3) Key derivation algorithm

A key derivation algorithm is used to derive (derive or derive) one or more secret values from a secret value. It is also referred to as the key derivation algorithm. For example, a new secret value DK derived from a secret value Key may be represented as follows: DK = KDF (Key). Common key derivation algorithms include a password-based key derivation function (password-based key derivation function, PBKDF), a scrypt (scrypt) algorithm, and the like. The PBKDF algorithm further includes a first-generation PBKDF1 and a second-generation PBKDF2. In a key derivation process of some KDF algorithms, a hash algorithm is used to perform a hash change on an input secret value. Therefore, an algorithm identifier may be further received as an input in the KDF function and used to indicate a hash algorithm to be used.

It should be noted that the KDF is not only applied to a process of obtaining a secret value through derivation, but also may be applied to aspects such as generation of authentication information and identity information.

Certainly, an authentication algorithm (authentication function, AUF, or AUTH function) may also be used to generate authentication information and identity information. The authentication algorithm is used to obtain the authentication information based on an input parameter.

(4) Key negotiation algorithm

Key negotiation is a process in which two communication parties exchange some parameters to obtain a key through negotiation. An algorithm used for key negotiation is referred to as a key negotiation algorithm or a key exchange algorithm. Common key negotiation algorithms include a Diffie-Hellman key exchange (Diffie-Hellman key exchange, DH) algorithm, a DH (ECDH) algorithm based on elliptic curve cryptography (Elliptic Curve Cryptosystems, ECC), Chinese cryptographic algorithms (such as SM1, SM2, SM3, and SM4), an Oakley (Oakley) algorithm, and the like.

It should be noted that the key negotiation algorithm may also be considered as a key negotiation protocol, that is, for both communication parties, the key negotiation algorithm defines rules for key generation and exchange, and how to use a key for encryption depends on other algorithms.

3. DH algorithm

ADH algorithm may allow both parties to create a key on an insecure channel. The key can be used as a key to encrypt communication content in subsequent communication.

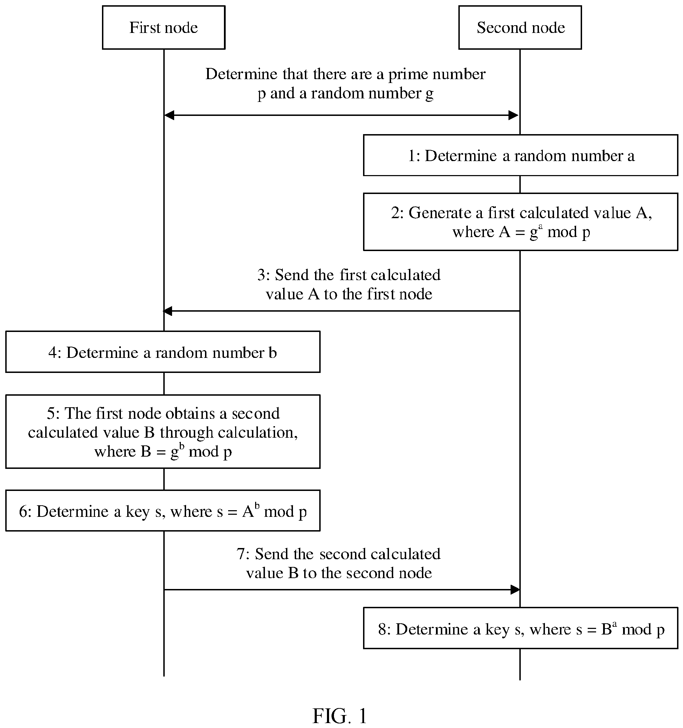

FIG. 1 is a schematic diagram of a DH algorithm according to an embodiment of this application. A first node and a second node obtain a prime number p and a random number g that are determined. Steps of exchanging keys between the two nodes by using the DH algorithm are as follows:

Step 1: The second node determines a random number a.
Step 2: The second node generates a first calculated value A, where $A = g^a \bmod p$.
Step 3: The second node sends the first calculated value A to the first node.
Step 4: The first node determines a random number b.
Step 5: The first node obtains a second calculated value B through calculation, where $B = g^b \bmod p$.
Step 6: The first node determines a key s, where $s = A^b \bmod p$.
Step 7: The first node sends the second calculated value B to the second node.
Step 8: The second node determines a key s, where $s = B^a \bmod p$.

Because $s = A^b \bmod p = (g^a \bmod p)^b \bmod p = g^{ab} \bmod p = (g^b \bmod p)^a \bmod p = B^a \bmod p$, the keys s calculated by the first node and the second node are the same. The key s is not directly transmitted in a message. Therefore, an attacker cannot directly obtain the key. The key s obtained through negotiation can be calculated only after the attacker obtains a or b through brute force cracking. In this case, a formula for obtaining a through calculation by the attacker by performing brute force cracking based on A, g, and p is: $a = \log_{gA} \bmod p$. Because there is no fast calculation algorithm in a logarithmic operation, and values of the prime number p and the random number g are usually relatively large, it is difficult for the attacker to obtain a by performing a logarithmic operation and a modulo operation based on A, the prime number p, and the random number g. Therefore, a key K obtained by using the DH algorithm is secure.

4. Elliptic curve algorithm

An elliptic curve algorithm is a security algorithm implemented based on a mathematical theory of elliptic curves. Usually, a curve equation of an elliptic curve discussed by people is a binary cubic equation. The equation has a plurality of forms. A general equation that is most commonly used is as follows:

$$E = \{(x, y) \in R | y^2 = x^3 + ax + b, 4a^3 + 27b^2 \neq 0\}$$

From curve equations and images, it is easy to know that the elliptic curve is symmetrical about an x-axis. A discriminant $(4a^3 + 27b^2)$ not equal to zero can realize that there is no singular point on the elliptic curve, that is, the elliptic curve is smooth and every point on the elliptic curve can be derived. This facilitates an addition operation on the elliptic curve.

(1) Point addition (point addition) operation (elliptic curve addition operation)

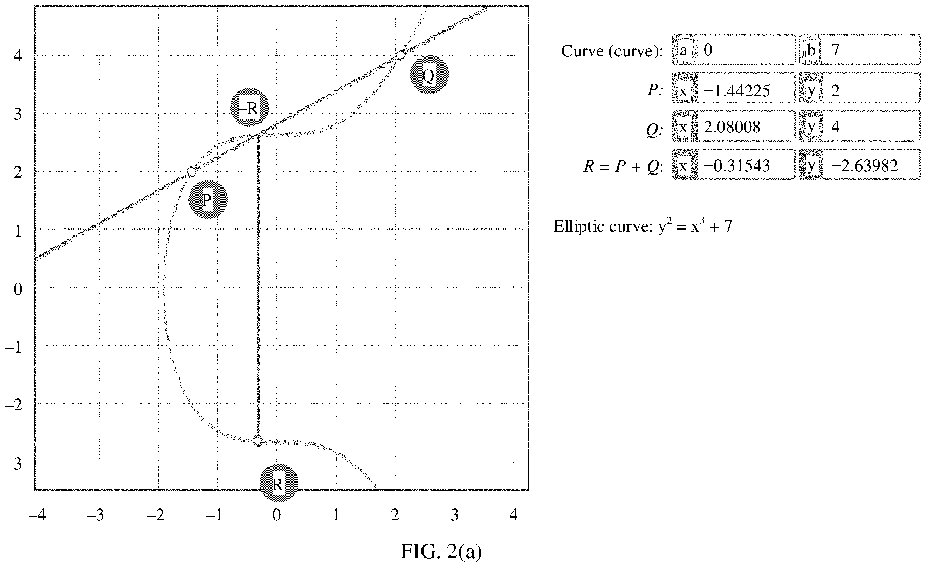

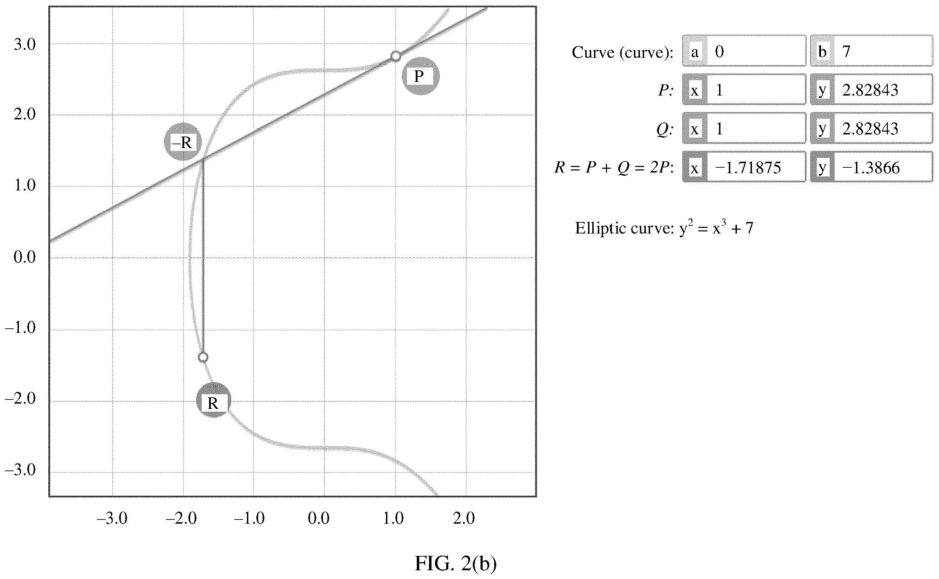

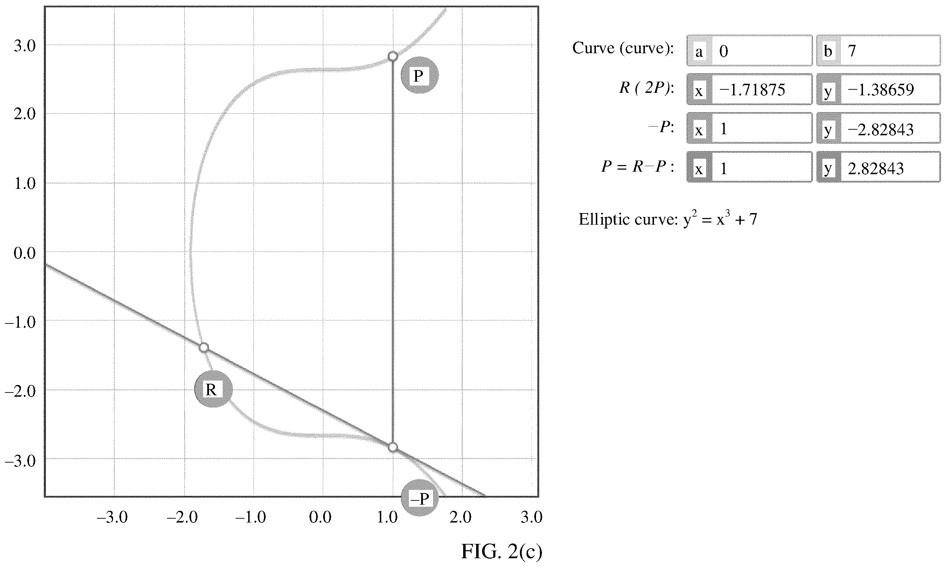

FIG. 2(a), FIG. 2(b), and FIG. 2(c) are schematic diagrams of possible point addition operations according to this application. Referring to FIG. 2(a), the addition operation on the elliptic curve may be expressed in the following manner: marking a point P and a point Q on the curve (an elliptic curve with a = 0 and b = 7 is used as an example in this specification, that is, $y^2 = x^3 + 7$); drawing a straight line that passes through the points P and Q and intersects the curve at a third point -R; and continuing to draw a point R symmetrical with the point -R about an x-axis. The point R is a point obtained by adding P and Q, and is denoted as P + Q = R.
It should be noted that, because the elliptic curve is symmetrical about the x-axis, R is a point symmetrical with the point -R, and because the point -R is on the elliptic curve, the point R is also definitely on the elliptic curve, that is, the point obtained by adding P and Q is on the elliptic curve.
Referring to FIG. 2(b), when P = Q, a tangent line to the elliptic curve is drawn by using a point P as a tangent point. The tangent line intersects the elliptic curve at another point denoted as a point -R. Similarly, a point R symmetrical with the point -R about the x-axis is drawn. The point R is a point obtained by adding P and P, and is denoted as P + P = 2P = R.

(2) Point subtraction operation (elliptic curve subtraction operation)

Referring to FIG. 2(c), because R - P = R + (-P), solving (R - P) is an addition operation between a point R and a point -P. The point -P is a point symmetrical with a point P. Therefore, a straight line that passes through the points R and -P is drawn. Because the elliptic curve is symmetrical about the x-axis, it can be learned that the straight line is tangent to the elliptic curve at the point -P. Therefore, the point P symmetrical with the point -P about the x-axis is drawn, and the point P is a point obtained by adding the points R and -P.

(3) Point multiplication (point multiplication) operation

If a point on the elliptic curve is added for n consecutive times, a result of adding a point P for n times is obtained, and the result is denoted as nP. The number n of times of addition is an integer, and may be referred to as a scalar. A point multiplication operation on the elliptic curve may be referred to as a scalar multiplication (scalar multiplication) operation. When the operation relates to a plurality of scalars, the operation may be referred to as a multi-scalar multiplication (multi-scalar multiplication) operation.

It should be noted that a point multiplication algorithm may have different definitions in different operation scenarios, and implementation depends on a specifically defined operation law of the point multiplication algorithm. Herein, a possible calculation manner of the elliptic curve point multiplication algorithm is illustrated.

(4) ECDH key exchange

The elliptic curve algorithm requires a cyclic subgroup of an elliptic curve defined in a finite field. Required parameters are as follows: a prime number p used to describe a size of the finite field, parameters a and b of an elliptic curve equation, a base point G used to generate the cyclic subgroup, an order n of the subgroup, and a cofactor h of the subgroup (h = N/n, where N is an order of an elliptic curve group). Generally, six parameters (p, a, b, G, n, h) are combined to define the elliptic curve used by the elliptic curve algorithm.

The ECDH algorithm is mainly implemented based on the following equation: $K = k \times G$, where K and G are points on the elliptic curve Ep (a, b), n is an order of G (nG = O∞, where O∞ refers to infinity), and k is an integer less than n. In K = kG, for given k and G, it is easy to calculate K according to an addition rule (for example, accumulation by using a point addition operation). However, conversely, for given K and G, it is very difficult to obtain k. In actual use of the elliptic curve algorithm, p is very large and n is also very large in principle. Therefore, it is a mathematical problem to calculate n points one by one and compare them with K.

In a key exchange process, it is assumed that two key exchange parties are Alice and Bob and that the two parties have shared curve parameters (elliptic curve E, order N, and base point G). Exchange steps may be as follows:

Step 1: Alice generates a random integer a, and calculates a first calculated value $A = a \times G$.
Step 2: Bob generates a random integer b, and calculates a second calculated value $B = b \times G$.
Step 3: Alice transfers A to Bob. The transfer of A can be made public. To be specific, an attacker can obtain A and G, but it is difficult for the attacker to calculate a based on A and G.
Step 4: Bob transfers B to Alice. Similarly, the transfer of B can be made public. To be specific, the attacker can obtain B and G, but it is difficult for the attacker to calculate a based on B and G.
Step 5: Bob receives A transferred by Alice, and calculates $Q = b \times A = ab \times G$.
Step 6: Alice receives B transferred by Bob, and calculates $Q' = a \times B = ab \times G$.

Alice and Bob both obtain $Q = b \times A = b \times (a \times G) = (b \times a) \times G = (a \times b) \times G = a \times (b \times G) = a \times B = Q'$ (commutative law and associative law), that is, both obtain the same key Q. Because the key Q is not directly transmitted, it is difficult for the attacker to calculate Q based on the obtained A, B, and G. Therefore, the key Q obtained through exchange by using the ECDH algorithm is secure.

5. Fresh parameter

A fresh parameter is a parameter in the information security field, and is used to generate a key, an authentication parameter, and the like, and may also be referred to as a fresh or fresh parameter. The fresh parameter may include at least one of a random number (number once, NONCE), a count value (counter), a serial number (serial number), a sequence number (sequence number), and the like. Fresh parameters generated at different moments are usually different. It may be understood that, because a specific value of a fresh parameter changes every time the fresh parameter is generated, and a fresh parameter used for generating a key (or an authentication parameter or the like) this time is different from a fresh parameter used for generating a key (or an authentication parameter or the like) last time, security of the generated keys can be improved.

The NONCE is a random value that is used only once (or non-repeated).

6. Password

A password may be understood as a password preconfigured or predefined by a node for access of another node, or understood as a secret value agreed between two nodes. Optionally, the password may be in a form of a character string including one or more of a number, a letter, a symbol, and the like, and may be input by using a keyboard, voice, biological information, or the like. For example, in a scenario in which a mobile phone terminal accesses a router that supports the Wireless Fidelity (Wireless Fidelity, Wi-Fi) protocol, the mobile phone terminal may access the router by using a "Wi-Fi password", and the "Wi-Fi password" may be understood as a password of the router.

Optionally, the password may be used in the following scenarios (assuming that the second node requests to access the first node).

Scenario 1: The first node predefines or preconfigures a first password, and a user of the second node may enter the first password on the second node. Specifically, the second node receives the first password entered by the user, and may request to access the first node based on the first password. For example, a vehicle owner configures a first password for a vehicle by using an administrator interface. When a new smartphone of the vehicle owner needs to access the vehicle, the vehicle owner may enter the first password on the new smartphone, and the smartphone may request to access the vehicle based on the entered password.

Scenario 2: The first node predefines or preconfigures a first password. Similarly, the first password for accessing the first node is also preconfigured on the second node. When the second node needs to access the first node, the second node may perform access by using the preconfigured first password. For example, when assembling a vehicle, a vehicle factory may configure a first password in a CDC of the vehicle, and configure the first password of the CDC in a radar of the vehicle. In this way, when accessing the CDC of the vehicle, the radar can use the first password of the CDC to access the CDC.

Scenario 3: A third-party device (such as a network-side device, a certificate center, or an authentication server, trusted by the first node) may allocate an agreed value to the first node and the second node, where the agreed value may be used by the second node to access the first node. Therefore, the agreed value may be considered as an access password of the first node.

It may be understood that the foregoing explanation about the algorithm is merely used to briefly describe an implementation principle, and does not limit that a same parameter must be used for implementation during use. In a specific implementation process of the algorithm, there may be other improvements and variations. The algorithm mentioned in this application may be an algorithm obtained after improvements and variations. For example, the ECC may be incorporated into the DSA algorithm, and a combination thereof is referred to as an ECDSA algorithm.

In addition, it should be noted that "authentication", "check", and "verification" mentioned in the embodiments of this application may represent a meaning of checking for correctness and appropriateness. The term "access" mentioned in the embodiments of this application indicates a process in which the first node establishes a connection to the second node. In some specific technical scenarios, "access" may also be described as "association".

The following describes a system architecture and a service scenario in the embodiments of this application. It should be noted that the system architecture and the service scenario described in this application are intended to describe the technical solutions in this application more clearly, and do not constitute a limitation on the technical solutions provided in this application. A person of ordinary skill in the art may know that with evolution of the system architecture and emergence of new service scenarios, the technical solutions provided in this application are also applicable to similar technical problems.

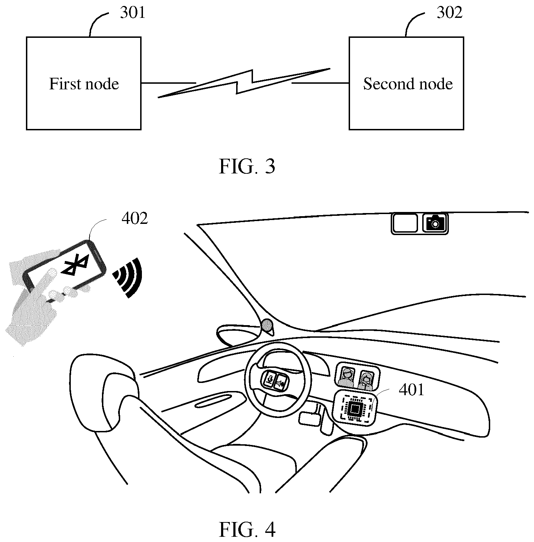

FIG. 3 is a schematic diagram of a possible communications system according to an embodiment of this application. The communications system includes a first node 301 and a second node 302. The second node 302 may request to associate with the first node 301. After the association succeeds, the first node 301 may communicate with the second node 302. A link for communication between the first node 301 and the second node 302 may include various types of connection media, including a wired link (for example, an optical fiber), a wireless link, a combination of a wired link and a wireless link, or the like. For example, a short-range connection technology may include 802.11b/g, Bluetooth (Bluetooth), ZigBee (ZigBee), a radio frequency identification (radio frequency identification, RFID) technology, an ultra wideband (ultra wideband, UWB) technology, a wireless short-range communications system (for example, an in-vehicle wireless short-range communications system), or the like. For another example, a long-range connection technology may include a long-term evolution (Long Term Evolution, long term evolution)-based communications technology, a 5th generation mobile communications technology (5th generation mobile networks or 5th generation wireless systems, 5th-Generation, 5G or 5G technology for short), a global system for mobile communications (global system for mobile communications, GSM), a general packet radio service (general packet radio service, GPRS), a universal mobile telecommunications system (universal mobile telecommunications system, UMTS), or other radio access technologies.

Certainly, other wireless communications technologies may also be used to support communication between the first node and the second node. For example, in some specific implementation scenarios, the first node may also be referred to as a node G, a control node, or an access point (access point), and the second node may also be referred to as a node T or a terminal. A communications link from the node G to the node T may be referred to as a link G, and a communications link from the node T to the node G may be referred to as a link T.

The first node 301 and the second node 302 may be devices of a same type, or may be devices of different types. For example, FIG. 4 is a schematic diagram of a possible communication scenario. A cockpit domain controller (cockpit domain controller, CDC) 401 of a vehicle is a control center in an intelligent cockpit device of the vehicle, and may be considered as a first node 401. A smartphone 402 is a device with data receiving and sending capabilities, and may be considered as a second node 402.

The CDC 401 may be accessed through Bluetooth. The smartphone 402 supports a Bluetooth function. Therefore, the smartphone 402 may request to access the CDC 401. A Bluetooth technology usually uses a digital pairing mode or a just works (just work) mode for connection. Therefore, in the digital pairing mode, an identifier of the CDC 401 is directly tapped on the smartphone 402, and a pairing number is confirmed with the CDC 401, so that the CDC 401 can be connected through Bluetooth. In this case, if an attacker connects to the CDC 401 by using an identity of the smartphone 402, the CDC 401 cannot identify the attacker, and the attacker successfully accesses the CDC 401, hence threatening privacy and security of the vehicle. Herein, only a Bluetooth access scenario is used as an example. A specific access scenario may further include access performed by using another communications technology. Similarly, in some other scenarios, if a node is accessed by using a conventional method, it is usually difficult to prevent the node from being accessed by an attacker having an unknown identity, and therefore communication security is affected.

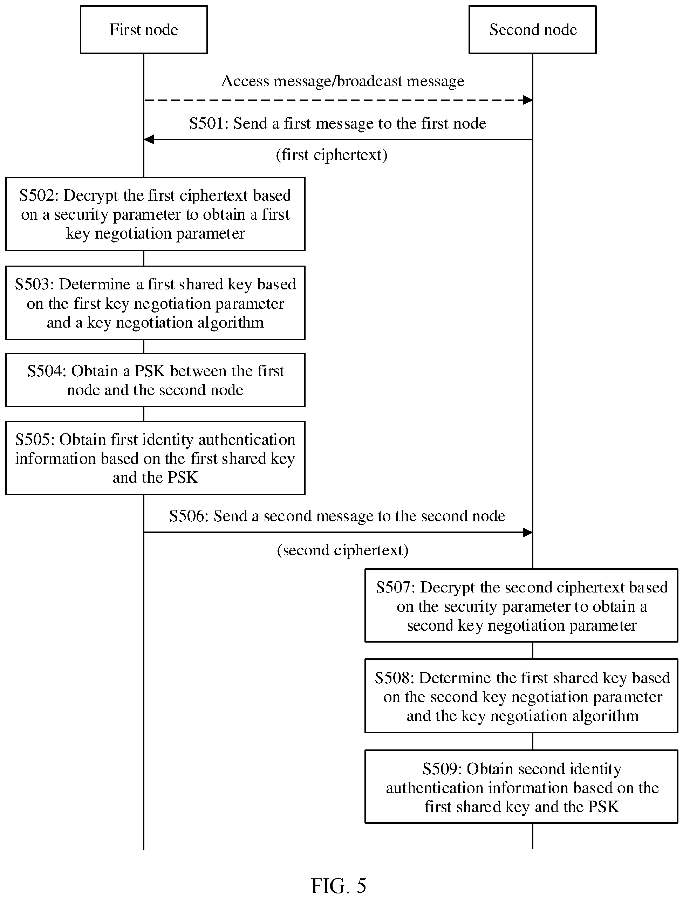

Therefore, to improve security, an embodiment of this application provides a secure access method shown in FIG. 5.

FIG. 5 is a schematic flowchart of a secure access method according to an embodiment of this application. Further, the method may be implemented based on the architecture shown in FIG. 3. The method includes at least the following steps.

Step S501: A second node sends a first message to a first node. The first message includes a first ciphertext, and the first ciphertext is obtained based on a first key negotiation parameter and a security parameter.

Specifically, the key negotiation parameter is a parameter determined in a key negotiation process. For ease of description, in each embodiment of this application, a key negotiation parameter sent by the second node to the first node is referred to as a first key negotiation parameter.

For example, the first node and the second node perform key negotiation based on a DH algorithm, and use a relatively large prime number p and a random number g as public keys. The second node determines a calculated value A based on its own private key (a) and the public keys (p and g). The prime number p, the prime number g, the private key a, and the calculated value A may all be considered as parameters generated in the key negotiation process. Because the calculated value A is determined by the second node and then sent to the first node, the calculated value A may be considered as the first key negotiation parameter.

For another example, the first node and the second node perform key negotiation based on an ECDH algorithm. Assuming that a determined elliptic curve is Ep and that a base point is G, the second node obtains a calculated value A (for example, $A = a \times G$) based on its own private key a and the base point G and sends the calculated value A to the first node. In this case, the calculated value A may be considered as the first key negotiation parameter.

The security parameter is a parameter shared between the first node and the second node, for example, a shared key (including a pre-shared key, a symmetric encryption key, or the like) between the first node and the second node, a first password, a preconfigured parameter between the first node and the second node, or a predefined parameter in a communications protocol.

The pre-shared key (pre-shared key, PSK) is a secret value shared between the first node and the second node. The second node may obtain, in a manner such as predefining, preconfiguring, or generating through mutual negotiation, the PSK shared with the first node, and the second node may encrypt a message by using the PSK.

The first password is an agreed access password between the first node and the second node, or may be understood as a password preconfigured or predefined by the first node to allow the second node to access the first node, or may be understood as a secret value agreed between the first node and the second node. In addition, for related descriptions of the first password, refer to descriptions in the technical term explanation part. Details are not described herein again.

Using the pre-shared key PSK as an example, the following illustrates four implementation methods for obtaining the first ciphertext based on the security parameter and the first key negotiation parameter.

Implementation method 1: The second node performs a point addition operation based on the PSK and the first key negotiation parameter to obtain the first ciphertext. Further, the first node may first perform a hash operation on the PSK, and then perform a point addition operation based on a hash value of the PSK and a first key negotiation algorithm to obtain the first ciphertext. For example, the first ciphertext C1 meets the following formula: C1 = hash (PSK) + KEt, where KEt is the first key negotiation parameter, + is an elliptic curve point addition operation, and hash is a hash algorithm.

A point addition operation may be performed on a point on the elliptic curve. However, in a specific implementation process, if the first key negotiation parameter is not a point on the elliptic curve, the first key negotiation parameter may be first mapped to a point on the elliptic curve, and then a point addition operation is performed. Other parameters such as the PSK and hash (PSK) may also be mapped similarly. In this application, a possible calculation method is illustrated: The second node may use hash (PSK) as a horizontal coordinate (if hash (PSK) exceeds a domain of definition, a modulo operation may be performed on hash (PSK), obtain a mapping point R (hash (PSK),y1) on the elliptic curve, and perform an elliptic curve point addition operation based on the point R and KEt to obtain a point S (x2, y2). The second node may use a horizontal coordinate x2 or a vertical coordinate y2 of the point S as C1. Correspondingly, when one x value corresponds to a plurality of y values, a condition that the y value needs to meet may be pre-agreed (for example, one y value whose absolute value is largest is selected), so that a corresponding point is determined.

Optionally, if a key negotiation algorithm directly used by the first node and the second node is the ECDH algorithm, the first ciphertext may be obtained by using the method in implementation 1. Certainly, if the key negotiation algorithm is not the ECDH algorithm, the key negotiation parameter may alternatively be mapped to a point on the elliptic curve, so that the first ciphertext is obtained by using a point addition operation.

Implementation method 2: The second node performs a multiplication operation based on the PSK and the first key negotiation parameter to obtain the first ciphertext. For example, the first ciphertext C1 meets the following formula: C1 = hash(PSK) $*$ KEt, where KEt is the first key negotiation parameter, $*$ is a multiplication operation, and hash is a hash algorithm.

Optionally, if a key negotiation algorithm directly used by the first node and the second node is the DH algorithm, the first ciphertext may be obtained by using the method in implementation 2. Certainly, if the key negotiation algorithm is not the DH algorithm, a multiplication operation may also be performed to obtain the first ciphertext.

Implementation method 3: The second node encrypts the first key negotiation parameter based on the PSK or a hash value of the PSK by using an encryption algorithm, to obtain the first ciphertext. For example, the obtained first ciphertext C1 meets the following formula: C1 = Enc (hash (PSK), KEt), where Enc is an encryption algorithm and may be specifically one or a combination of an SM4 algorithm, a ZUC algorithm, an AES algorithm, and the like.

Implementation method 4: The second node may derive a key (for ease of description, the key is referred to as a first intermediate key) based on the PSK, and encrypt the first key negotiation parameter based on the first intermediate key to obtain the first ciphertext. For example, the first intermediate key K1 meets the following formula: K1 = KDF (Hash (PSK), NONCEd), where KDF is a derivation algorithm used for deriving the first intermediate key, and NONCEd is a fresh parameter (an optional parameter, used only as an example herein) used for deriving the first intermediate key. The first ciphertext C1 obtained by the second node meets C1 = Enc (K1, KEt).

It should be noted that, to describe the solution more clearly herein, implementation method 4 explains how to obtain the first ciphertext by performing a plurality of steps. In actual processing, the first ciphertext may alternatively be obtained by performing one step. The first intermediate key K1 is only an intermediate result, that is, a manner of determining the first ciphertext C1 meets C1 = Enc (KDF (Hash (PSK), NONCEd), KEt).

It may be understood that the PSK may also be replaced with the first password, a preconfigured parameter between the first node and the second node, a parameter predefined in a communications protocol, or the like. Details are not described herein again. In a possible design, if the second node has the PSK between the second node and the first node, the second node obtains the first ciphertext based on the PSK and the first key negotiation parameter. If the second node does not have the PSK between the second node and the first node, the second node obtains the first ciphertext based on the first password and the first key negotiation parameter.

Optionally, the first message may further include a fresh parameter (fresh parameter). For ease of description, in each embodiment of this application, the fresh parameter included in the first message is referred to as a first fresh parameter. The fresh parameter includes at least one of a random number, a count value, a serial number, and the like.

Optionally, the first node may broadcast a message. Correspondingly, the second node may receive the message broadcast by the first node. The second node sends the first information to the first node based on the message broadcast by the first node. Further, optionally, the message broadcast by the first node may carry indication information (or referred to as a key negotiation algorithm capability of the first node) of key negotiation algorithms supported by the first node.

Further, optionally, the second node may determine one of the key negotiation algorithms supported by the first node as an algorithm to be used in key negotiation with the first node. In this case, the first message may further carry an identifier of the key negotiation algorithm selected by the second node.

The second node sends the first message to the first node. Correspondingly, the first node receives the first message from the second node.

It should be noted that the first message may also be referred to as an access request message (or access request information), or may be referred to as an association request message (or may be referred to as association request information in a specific scenario). In each embodiment of this application, a name of a message or information is not limited, and only content of the message is described and expressed as an example. The name of the message may be randomly replaced.

Step S502: The first node decrypts the first ciphertext based on the security parameter to obtain the first key negotiation parameter.

Specifically, the first ciphertext is obtained based on the security parameter and the first key negotiation parameter, and the security parameter is a parameter that can be obtained by both the first node and the second node. Therefore, the first node can decrypt the first ciphertext based on the security parameter to obtain the first key negotiation parameter.

Corresponding to the foregoing implementations of obtaining the first ciphertext by the second node, several implementations of decrypting the first ciphertext are hereinafter illustrated in this application.

Implementation 1: The first node performs an elliptic point subtraction operation based on the first ciphertext and the PSK (or the hash value of the PSK) to obtain the first key negotiation parameter. For example, the first key negotiation parameter KEt meets the following formula: KEt = C1 - hash (PSK) , where C1 is the first ciphertext, + is an elliptic curve point subtraction operation, and hash is a hash algorithm.

Implementation 2: The first node performs a division operation based on the first ciphertext and the PSK (or the hash value of the PSK) to obtain the first key negotiation parameter. For example, the first key negotiation parameter KEt meets the following formula: KEt = C1 ÷ hash (PSK), where C1 is the first ciphertext, ÷ is a division operation, and hash is a hash algorithm.

Implementation 3: The first node decrypts the first ciphertext by using an encryption algorithm and using the PSK or the hash value of the PSK as an input of the encryption algorithm. For example, the first key negotiation parameter KEt meets the following formula: KEt = Dec (hash (PSK), C1), where Dec is a decryption algorithm corresponding to the encryption algorithm Enc (the encryption algorithm and the decryption algorithm are generally a same algorithm, or may be specifically different calculation procedures in the algorithm, and different names are used herein for ease of description).

Implementation 4: The first node derives the first intermediate key based on the PSK, and decrypts the first ciphertext based on the first intermediate key to obtain the first key negotiation parameter. For example, the first intermediate key K1 meets the following formula: K1 = KDF (Hash (PSK), NONCEd), where KDF is a derivation algorithm used for deriving the first intermediate key, and NONCEd is a fresh parameter used for deriving the first intermediate key. The obtained first key negotiation parameter KEt meets the following formula: KEt = Dec (K1, C1).

Step S503: The first node determines a first shared key based on the first key negotiation parameter and the key negotiation algorithm.

Specifically, the key negotiation algorithm is a key negotiation algorithm pre-agreed between the first node and the second node, or the second node may carry the identifier of the key negotiation algorithm to the first message to indicate the key negotiation algorithm to be used.

Several manners of determining the first shared key based on the first key negotiation parameter and the key negotiation algorithm are illustrated in this application.

Manner 1: The first node may determine a private key of the first node, and determine an exchange key based on the key negotiation algorithm, the first key negotiation parameter, and the private key of the first node. The exchange key may be used as the first shared key.

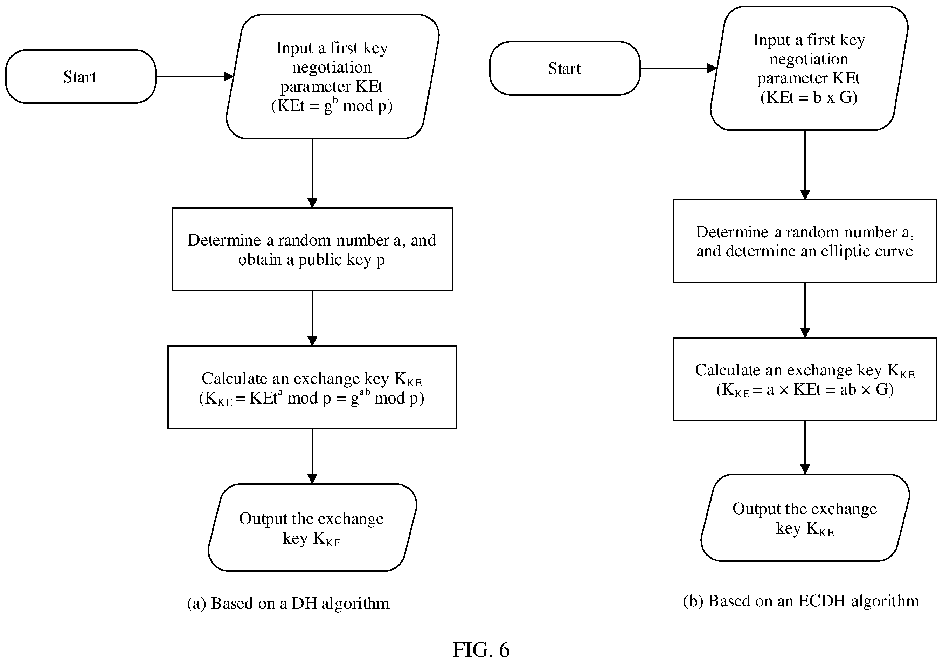

FIG. 6 is a schematic flowchart for determining the exchange key (the first shared key) according to an embodiment of this application. Referring to a part (a) of FIG. 6, a process of determining the exchange key based on the DH algorithm is described. The first node may input the first key negotiation parameter KEt into the DH algorithm. The first node determines a random number b (used as the private key of the first node) according to a procedure of the DH algorithm, and may determine the exchange key $K_{KE}$ based on the random number b and the first key negotiation parameter.

Referring to a part (b) of FIG. 6, the first node may input the first key negotiation parameter KEt into the ECDH algorithm. The first node determines a random number b (used as the private key of the first node) according to a procedure of the ECDH algorithm, and determines the exchange key $K_{KE}$ based on the random number b and the elliptic curve.

It may be understood that, in some specific designs, the key negotiation algorithm may be encapsulated into a calculation procedure, where an input is the first key negotiation parameter, and an output is the first shared key. Certainly, in some other possible designs, the steps of determining the private key and calculating the exchange key may be performed in different calculation procedures.

Manner 2: The first node may determine a private key of the first node, and determine an exchange key based on the key negotiation algorithm, the first key negotiation parameter, and the private key of the first node. The first node determines the first shared key based on the exchange key and the fresh parameter.

For example, the first node may determine the exchange key $K_{KE}$ based on the method described in manner 1, and determine the first shared key Kgt based on the exchange key $K_{KE}$. For example, the first shared key Kgt meets the following formula: Kgt = KDF ($K_{KE}$, NONCEt, NONCEg), where NONCEt is the first fresh parameter (optional parameter), and NONCEg is a second fresh parameter (optional parameter).

It should be noted that, because the first shared key (hereinafter referred to as the first shared key Kgt) obtained in manner 2 is determined based on the exchange key $K_{KE}$, and the exchange key is used as the first shared key in the solution described in manner 1, for ease of description, the first shared key kgt is described as the second shared key in the claims. It may be understood that "first" and "second" in this application are merely intended to distinguish between parameters, and are not intended to limit specific parameter names.

Optionally, the secure access method shown in FIG. 5 includes one or more of step S504 to step S509. Step S504 to step S509 are specifically as follows:

Step S504: The first node obtains the pre-shared key (pre-shared key, PSK) between the first node and the second node.

Specifically, the PSK is a secret value shared between the first node and the second node. The following illustrates two possible cases in which the first node obtains the PSK between the first node and the second node.

Case 1: A correspondence between the PSK and an identity of the second node exists on the first node. In other words, on the first node, the PSK between the first node and the second node may correspond to the identity of the second node. The first node may obtain the corresponding PSK based on the identity of the second node and the correspondence.

The identity of the second node may be an ID, a media access control (media access control, MAC) address, a domain name, a domain address, or another user-defined identity of the second node, and is also referred to as a device identity of the second node. Further, the second node may add the identity of the second node to the first message, so that the first node can obtain the identity of the second node. Optionally, the correspondence between the PSK and the identity of the second node may be a correspondence preconfigured or predefined on the first node, or may be a correspondence stored after the first node and the second node generate the PSK through negotiation. The correspondence may be in a form of one or more of a correspondence set, a data table, a database, and the like. This is not limited in this application. Table 1 is a possible set of correspondences between PSKs and identities of second nodes illustrated in an embodiment of this application. The correspondence set includes identities of a plurality of second nodes, corresponding PSKs, and PSK types. For example, for a second node whose identity is "ID1", the first node may determine, based on a temporary ID "ID1.1", that a PSK corresponding to the second node is "PSK1". Further, a type of "PSK1" is preconfigured.

Table 1 Set of correspondences between PSKs and identities of second nodes

| Identity | PSK | Type |
|---|---|---|
| ID1 (temporary ID1.1) | PSK1 | Preconfigured |
| ID2 (temporary ID2.1) | PSK2 | Generated |
| ID3 (temporary ID3.1) | PSK3 | Generated |

It should be noted herein that, if the correspondence is preconfigured, the PSK preconfigured on the first node is the same as the PSK preconfigured on the second node; or if the correspondence is stored after the PSK is generated, a method and parameter for generating the PSK by the first node are also the same as a method and parameter for generating the PSK by the second node. In a possible design, if the correspondence between the PSK and the identity of the second node exists on the first node, it may indicate that the second node has accessed the first node before, or that the first node has preconfigured the PSK between the first node and the second node. Therefore, the first node can obtain the PSK based on the correspondence.

It should be noted that, if the first node obtains the PSK in the manner in case 1, step S504 may alternatively be performed before step S502, and the PSK may be used to decrypt the first ciphertext. A sequence of performing other steps in this application may also be changed without affecting solution implementation.

Case 2: The first node generates the PSK between the first node and the second node. Specifically, the parameter for generating the PSK may include one or more of the first password, the first shared key (which may be specifically the exchange key $K_{KE}$ or the shared key kgt), the first fresh parameter, the second fresh parameter, an identity of the first node, the identity of the second node, and the like. The following illustrates several cases of parameters for generating the PSK.

Case 1: The first node determines a random number, and uses the random number as the PSK between the first node and the second node.

Case 2: The first message includes the first fresh parameter, and the first node generates the PSK based on the first fresh parameter and the fresh parameter determined by the first node. For example, the generated PSK meets PSK = KDF (NONCEt, NONCEg), where KDF is a cryptographic algorithm for generating the PSK, NONCEt is the first fresh parameter, and NONCEg is the second fresh parameter.

Case 3: The first node generates the PSK based on the first password. For example, the generated PSK meets PSK = KDF (pw, IDg, IDt, NONCEt, NONCEg, Kgt), where pw is the first password, IDg is the identity of the first node, IDt is the identity of the second node, NONCEt is the first fresh parameter, and NONCEg is the second fresh parameter. It should be noted that IDt, IDg, NONCEt, NONCEg, and Kgt are optional parameters and that Kgt may also be replaced with the foregoing exchange key $K_{KE}$.

Further, if the first shared key Kgt is derived based on the exchange key $K_{KE}$, the PSK generated by the first node may meet:

$$PSK = KDF \ (pw, IDt, IDg, NONCEt, NONCEg, KDF \ (K_{KE}, NONCEt, NONCEg).$$

For the parameters, refer to the foregoing description. Details are not described herein again.

In a possible design, after generating the PSK between the first node and the second node, the first node may store the correspondence between the PSK and the identity of the second node.

Step S505: The first node obtains first identity authentication information based on the first shared key and/or the PSK.

Specifically, the first identity authentication information is used to authenticate the identity of the first node. For example, the first node may send the first identity authentication information to another node (for example, the second node), and the another node may determine the identity of the first node based on the first identity authentication information.

The following three implementations of obtaining the first identity authentication information are illustrated in this application.

Implementation 1: The first node determines the first identity authentication information based on the pre-shared key PSK. Optionally, optional parameters participating in generating the first identity authentication information may further include one or more of the first shared key (which may be $K_{KE}$ or kgt), the first message, a second message (described later) in which the first identity information is located, identifiers of key negotiation algorithms supported by the first node (or referred to as the key negotiation algorithm capability of the first node), and identifiers of key negotiation algorithms supported by the second node (or referred to as a key negotiation algorithm capability of the second node). The foregoing message may be an entire message, or may be some parameters in the message. For example, the entire first message may be used as a parameter, or the first fresh parameter in the first message may be used as a parameter.

For example, in a possible design, the first identity authentication information AUTHg meets AUTHg = KDF (PSK, first message, some parameters in the second message), where the second message may be a message (described later) in which the first identity authentication information is located. In this way, the another node (for example, the second node) may check, based on the first identity authentication information, whether a PSK stored on the another node is the same as the PSK on the first node (if the PSK is the same as the PSK on the first node, it indicates that the identity of the first node is trusted), and may further check whether some parameters in the first message and the second message are tampered with. In other words, the first identity authentication information can not only authenticate the identity of the first node, but also protect integrity of the first message and the second message. For another example, in another possible design, the first identity authentication information AUTHg may meet AUTHg = AUF (PSK, $K_{KE}$, first message, second fresh parameter) . For the parameters, refer to the foregoing description.

Implementation 2: The PSK in implementation 1 may also be replaced with the exchange key $K_{KE}$ or the first shared key Kgt.

Implementation 3: The first node determines a first key (or referred to as an identity authentication key) based on the first shared key and/or the PSK, and generates the first identity authentication information based on the first key. It may be understood that, during generation of the first identity authentication information, the PSK or the first shared key is not directly used, but the first key obtained based on the PSK and/or the first shared key is used. In this way, security of the PSK and the first shared key can be protected, and security of the PSK and the first shared key can be improved.

Optionally, the first identity authentication information AUTHg generated by the first node meets AUTHg = KDF (Kauth, first message, some parameters in the second message). For meanings of the parameters, refer to the foregoing definitions.

Further, optionally, the following designs may be available for the first node to determine the first key (Kauth) based on the first shared key and/or the PSK.

Design 1: The first key Kauth determined by the first node meets:

$$Kauth = KDF \ (K_{KE}, NONCEt, NOCNEg, IDg, IDt, \ authentication),$$

where "authentication" is an optional key identifier. In specific implementation, a character string may be preconfigured or specified in a protocol as the key identifier. NONCEt, NOCNEg, IDg, IDt, and "authentication" are optional parameters. For specific meanings, refer to the foregoing description.

Design 2: The first key Kauth determined by the first node meets:

$$\text{Kauth} = \text{KDF} \ (\text{K}_{\text{KE}}||\text{PSK}, \text{NONCEt}, \text{NOCNEg}, \text{IDg}, \text{IDt}, \ \text{authentication}),$$

where "||" may represent character string concatenation (this is merely an example; there may be no concatenation in a specific implementation process; for example, two separate input parameters are used). NONCEt, NOCNEg, IDg, IDt, and "authentication" are optional parameters. For specific meanings, refer to the foregoing description.

Design 3: $\text{K}_{\text{KE}}$ in designs 1 and 2 may also be replaced with Kgt derived based on $\text{K}_{\text{KE}}$. Further, a manner of determining the first key Kauth meets:

$$\text{Kauth} =$$

$$\text{KDF}[\text{KDF} \ (\text{K}_{\text{KE}}, \text{NONCEt}, \text{NONCEg})||\text{PSK}, \text{NONCEt}, \text{NOCNEg}, \text{IDg}, \text{IDt}, \text{"authentication"}].$$

For the parameters, refer to the foregoing definitions.

Similarly, the first node may also derive an encryption key and an integrity protection key by using the methods shown in designs 1 to 3.

For example, the encryption key Kenc determined by the first node may meet:

$$\text{Kenc} = \text{KDF} \ (\text{K}_{\text{KE}}||\text{PSK}, \text{NONCEt}, \text{NOCNEg}, \text{IDg}, \text{IDt}, \ \text{EncryptionKey}).$$

For another example, the integrity protection key Kmac determined by the first node may meet:

$$\text{Kmac} = \text{KDF} \ (\text{K}_{\text{KE}}||\text{PSK}, \text{NONCEt}, \text{NOCNEg}, \text{IDg}, \text{IDt}, \ \text{MACKey}).$$

Step S506: The first node sends the second message to the second node. The second message includes a second ciphertext, and the second ciphertext is obtained based on a second key negotiation parameter and the security parameter. Optionally, the second message may further include the first identity authentication information.

Specifically, for ease of description, the key negotiation parameter sent by the first node to the second node is referred to as the second key negotiation parameter.

The second key negotiation parameter is usually determined by the first node based on the private key of the first node.

The security parameter is a parameter shared between the first node and the second node, for example, a shared key (including the pre-shared key, the symmetric encryption key, or the like) between the first node and the second node, a password agreed between the first node and the second node, a preconfigured parameter between the first node and the second node, or a parameter predefined in a communications protocol. For details, refer to the detailed description in S501. Details are not described herein again.

Using the PSK as an example, the following illustrates four implementation methods for obtaining the second ciphertext based on the security parameter and the second key negotiation parameter by the first node.

Implementation method 1: The first node performs a point addition operation based on the PSK (or the hash value of the PSK) and the second key negotiation parameter to obtain the second ciphertext. For example, the second ciphertext C2 meets the following formula: C2 = hash (PSK) + KEg, where KEg is the second key negotiation parameter, + is an elliptic curve point addition operation, and hash is a hash algorithm.

Implementation method 2: The first node performs a multiplication operation based on the PSK (or the hash value of the PSK) and the second key negotiation parameter to obtain the second ciphertext. For example, the second ciphertext C2 meets the following formula: C2 = hash (PSK) * KEg, where KEg is the second key negotiation parameter, * is a multiplication operation, and hash is a hash algorithm.

Implementation method 3: The first node encrypts the second key negotiation parameter based on the PSK (or the hash value of the PSK) by using an encryption algorithm, to obtain the second ciphertext. For example, the obtained second ciphertext C2 meets the following formula: C2 = Enc (hash (PSK), KEg), where Enc is an encryption algorithm and may be specifically one or more of the SM4 algorithm, the ZUC algorithm, the AES algorithm, and the like.

Implementation method 4: The first node may derive the first intermediate key based on the PSK or the hash value of the PSK, and encrypt the second key negotiation parameter by using the first intermediate key. For example, the first intermediate key K1 meets the following formula: K1 = KDF (Hash (PSK), NONCEd), where KDF is a derivation algorithm used for deriving a key, and NONCEd is a fresh parameter (it is an optional parameter, used only as an example herein; if NONCEd is a random number determined by the second node, the NONCEd may be sent to the first node by using a message) used for deriving the first intermediate key. The second ciphertext C2 obtained by the first node meets C2 = Enc (K1, KEg).

KEg It may be understood that the PSK may also be replaced with the first password, a preconfigured parameter between the first node and the second node, a parameter predefined in a communications protocol, or the like. Details are not described herein again.

In a possible design, if the first node has the PSK between the first node and the second node, the first node obtains the second ciphertext based on the PSK and the first key negotiation parameter. If the first node does not have the PSK between the first node and the second node, the first node obtains the second ciphertext based on the first password and the second key negotiation parameter.

In a possible design, according to a protocol specification, if the second node obtains the first ciphertext in a manner, the first node also obtains the second ciphertext in a corresponding manner, to facilitate encryption and decryption.

Optionally, the second message may further include the fresh parameter (fresh parameter) determined by the second node. For ease of description, in each embodiment of this application, the fresh parameter included in the second message is referred to as the second fresh parameter. The fresh parameter includes at least one of a random number, a count value, a serial number, and the like.

Further, optionally, the second message may further include a message authentication code (message authentication code, MAC). The MAC is a message authentication code generated based on an integrity protection algorithm, and is used to protect integrity of the second message.

The first node sends the second message to the second node. Correspondingly, the second node receives the second message from the first node. It should be noted that, in a specific implementation process, the second message may also be referred to as an authentication request message, a security context request message, or an identity authentication request message, or may be referred to as authentication request information, security context request information, or identity authentication request information.

Step S507: The second node decrypts the second ciphertext based on the security parameter to obtain the second key negotiation parameter.

Specifically, the second ciphertext is obtained based on the security parameter and the first key negotiation parameter. Therefore, the second node can decrypt the second ciphertext based on the security parameter to obtain the second key negotiation parameter.

Corresponding to the foregoing implementations of obtaining the second ciphertext by the first node, several implementations of decrypting the second ciphertext are hereinafter illustrated in this application.

Implementation 1: The second node performs a point subtraction operation based on the second ciphertext and the PSK (or the hash value of the PSK) to obtain the second key negotiation parameter.

Implementation 2: The second node performs a division operation based on the second ciphertext and the PSK (or the hash value of the PSK) to obtain the second key negotiation parameter.

Implementation 3: The second node decrypts the second ciphertext by using an encryption algorithm and using the PSK or the hash value of the PSK as an input of the decryption algorithm. For example, the first key negotiation parameter KEt meets the following formula: KEg = Dec (hash (PSK), C2), where Dec is a decryption algorithm corresponding to the encryption algorithm Enc.

Implementation 4: The second node may derive the first intermediate key based on the PSK, and decrypt the second ciphertext by using the first intermediate key. For example, the first intermediate key K1 meets the following formula: K1 = KDF (Hash (PSK), NONCEd), where KDF is a derivation algorithm used for deriving the first intermediate key, and NONCEd is a fresh parameter used for deriving the first intermediate key. For example, the first key negotiation parameter KEt meets the following formula: KEt = Enc (K1, C2).

It should be noted that, for the foregoing implementations, reference may be made to the detailed descriptions of the decryption modes on the first node in step S502.

Step S508: The second node determines the first shared key based on the second key negotiation parameter and the key negotiation algorithm.

Specifically, the key negotiation algorithm is a key negotiation algorithm pre-agreed between the first node and the second node, or the second node may determine, based on a requirement, an algorithm to be used in the key negotiation process from one or more key negotiation algorithms supported by the first node, or the first node may add an identifier of the key negotiation algorithm to a message sent to the second node, to indicate the key negotiation algorithm to be used.

Several manners of determining the first shared key based on the second key negotiation parameter and the key negotiation algorithm are illustrated in this application.

Manner 1: The second node determines the private key of the second node, and determines the exchange key based on the key negotiation algorithm, the second key negotiation parameter, and the private key of the second node. The exchange key may be used as the first shared key.

Manner 2: The second node may determine the exchange key based on the second key negotiation parameter and the private key of the second node. The second node determines the first shared key based on the exchange key and the fresh parameter.

It should be noted that, for the foregoing implementations, reference may be made to the detailed description of determining the first shared key by the first node in step S503.

Step S509: The second node obtains second identity authentication information based on the first shared key and/or the PSK.

Specifically, the PSK is a secret value shared between the first node and the second node. The PSK may be generated based on the fresh parameter from the second node and the fresh parameter from the first node, or may be preconfigured or predefined on the first node and the second node.

Before determining the second identity authentication information, the second node may first obtain the PSK between the second node and the first node. The following illustrates two possible cases in which the second node obtains the PSK between the first node and the second node.

Case 1: A correspondence between the PSK and the identity of the first node exists on the second node, and the second node may obtain the corresponding PSK based on the identity of the first node and the correspondence. The correspondence may be in a form of one or more of a correspondence set, a data table, a database, and the like. This is not limited in this application. For details, refer to related descriptions of the first node in step S504. Details are not described herein again.

It should be noted that, if the second node obtains the PSK in the manner in case 1, step S509 may alternatively be performed before step S501, and the PSK may be used to encrypt the first key negotiation parameter.

Case 2: The second node generates the PSK between the second node and the first node. Specifically, the parameter for generating the PSK may include one or more of the first password, the first shared key, the first fresh parameter, the second fresh parameter, the identity of the first node, the identity of the second node, and the like. For detailed descriptions, refer to the detailed descriptions of generating the PSK by the first node in step S504. Details are not described herein again.

Optionally, that the second node obtains second identity authentication information based on the first shared key and/or the PSK may include at least the following three implementations.

Implementation 1: The second node obtains the second identity authentication information based on the PSK. Optionally, optional parameters participating in generating the second identity authentication information may further include one or more of the first shared key (which may be $K_{KE}$ or kgt), the first message, the second message, a third message (described later) in which the second identity authentication information is located, the key negotiation algorithm capability of the first node, and the key negotiation algorithm capability of the second node. The foregoing message may be an entire message, or may be some parameters in the message. For example, the entire second message may be used as a parameter, or the second fresh parameter (NONCEt) in the second message may be used as a parameter.

For example, in a possible design, the second identity authentication information AUTHt meets AUTHt = KDF (PSK, first message, second message, some parameters in the third message, the key negotiation algorithm capability of the first node). In this way, another node (for example, the first node) may check, based on the second identity authentication information, whether a PSK on the another node is the same as the PSK on the second node (if the PSK is the same as the PSK on the second node, it indicates that the identity of the second node is trusted), and may further check whether some parameters in the first message, the second message, and the third message are tampered with. In other words, the second identity authentication information can not only authenticate the identity of the second node, but also protect integrity of the first message, the second message, and the third message.

For another example, in another possible design, the second identity authentication information AUTHt may meet AUTHg = AUF (PSK, $K_{KE}$, second message, NONCEt, the key negotiation algorithm capability of the first node). For the parameters, refer to the foregoing description.

Implementation 2: The PSK in implementation 1 may be replaced with the foregoing exchange key $K_{KE}$ or the first shared key Kgt.

Implementation 3: The second node determines a first key (or referred to as an identity authentication key) based on the first shared key and/or the PSK, and generates the second identity authentication information based on the first key. In other words, Kgt in implementation 1 may be replaced with the first key Kauth.

It may be understood that, during generation of the second identity authentication information, the PSK or the first shared key is not directly used, but the first key obtained based on the PSK or the first shared key is used. In this way, security of the PSK and the first shared key can be improved.

Optionally, the second identity authentication information AUTHt generated by the second node meets AUTHt = KDF (Kauth, first message, second message, some parameters in the third message, the key negotiation algorithm capability of the first node). For meanings of the parameters, refer to the foregoing definitions.

It should be noted that for specific cases in which the second node generates a first key Kauth, an encryption key, and an integrity protection key, reference may be made to the description of the first node in step S505. Details are not described herein again.

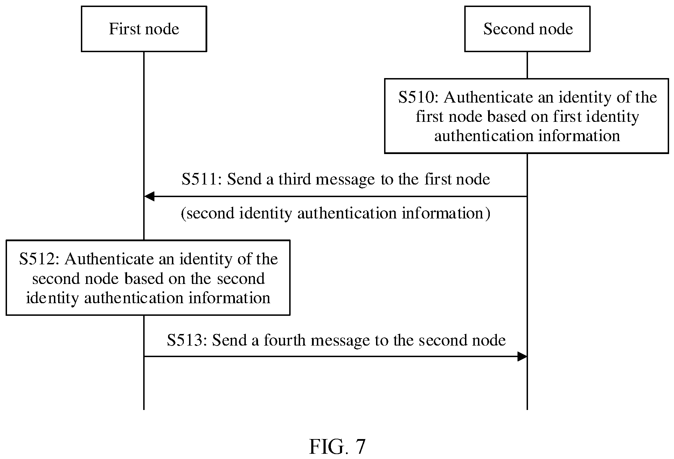

Optionally, the secure access method in this embodiment of this application may further include one or more of step S510 to step S514 shown in FIG. 7. Step S510 to step S514 are specifically as follows:

Step S510: The second node authenticates the identity of the first node based on the first identity authentication information.

Specifically, if the first node sends the first identity information to the second node (for example, the second message carries the first identity authentication information), the second node may authenticate the identity of the first node based on the first identity information.

In an optional solution, according to a protocol specification, if the first node uses a specific parameter to generate the first identity authentication information, the second node should also use the same parameter to generate check information. If the check information is the same as the first identity authentication information, it is considered that verification succeeds.

For example, because the first identity authentication information is determined based on the first shared key and/or the PSK, the second node may authenticate the identity of the first node based on the first shared key and/or the PSK and the first identity authentication information. Specifically, if the check information generated by the second node based on the first shared key and/or the PSK is the same as the first identity authentication information, it is determined that identity authentication of the first node succeeds.

For another example, if the first identity authentication information AUTHg meets AUTHg = KDF (Kauth, first message, some parameters in the second message), the second node generates check information check1 = KDF (Kauth, first message, some parameters in the second message) based on Kauth, and if the check information check1 is the same as AUTHg, it is determined that identity authentication of the first node succeeds.

Optionally, if verification of the first identity authentication information fails, the second node may disconnect a communication connection between the second node and the first node or discard the second message, and may further send the first message to the first node again. For example, if verification of the first identity authentication information fails, it indicates that the first shared key (PSK) on the second node is different from the first shared key (PSK) on the second node. Therefore, the identity of the first node is untrusted, and the first node may be a node impersonated by an attacker. Therefore, the second message is discarded, and the first message is sent to the first node again. In this way, access to an untrusted node is avoided.

It should be noted that step S510 may alternatively be performed before step S509. A sequence of performing other steps in this application may also be changed without affecting solution implementation.

Step S511: The second node sends the third message to the first node.

Specifically, the third message carries the second identity authentication information. The second identity authentication information may be the second identity authentication information determined in step S509.

It may be understood that the second node sends the third message to the first node, and correspondingly, the first node receives the third message from the second node.

Step S512: The first node authenticates the identity of the second node based on the second identity authentication information.

Specifically, because the second identity authentication information is determined by the second node based on the first shared key and/or the PSK, the first node may also obtain the first shared key and/or the PSK to check the second identity authentication information.

In an optional solution, according to a protocol specification, if the second node uses a specific parameter to generate the second identity authentication information, the first node should also use the same parameter to generate check information. If the check information is the same as the second identity authentication information, it is considered that the verification succeeds.

For example, because the second identity authentication information is determined based on the first shared key and/or the PSK, the first node may authenticate the identity of the second node based on the first shared key and/or the PSK and the second identity authentication information. Specifically, if the check information generated by the first node based on the first shared key and/or the PSK is the same as the second identity authentication information, it is determined that identity authentication of the first node succeeds.

For another example, the second identity authentication information AUTHt meets AUTHt = KDF (Kauth, first message, second message, some parameters in the third message, the key negotiation algorithm capability of the first node). In this case, the first node may generate the check information check2 based on the same parameter and manner, that is, the check information check2 meets check2 = KDF (Kauth, first message, second message, some parameters in the third message, the key negotiation algorithm capability of the first node). If the check information check2 is the same as the second identity authentication information AUTHt, it is determined that identity authentication of the second node succeeds.

Optionally, if verification of the second identity authentication information fails, the first node may disconnect the communication connection between the second node and the first node. If verification of the second identity authentication information succeeds, it indicates that the identity of the second node is trusted, and the first node can communicate with the second node.

Step S513: The first node sends a fourth message to the second node.

Optionally, the fourth message is used to indicate to the second node that an association has been established, or indicate to the second node that access succeeds, or indicate that identity verification of the second node succeeds, or the like. Correspondingly, the second node may receive the fourth message from the first node.

Further, the fourth message may be referred to as an association establishment message (which may also be referred to as an association complete message in a specific scenario).

In the embodiment shown in FIG. 5, the second node encrypts the first key negotiation parameter based on the security parameter (the security parameter may be the PSK or the first password) to obtain the first ciphertext. Because the same security parameter is preconfigured for the first node or the first node can obtain the same security parameter, the first node can decrypt the first ciphertext to obtain the first key negotiation parameter, and can subsequently generate the shared key based on the first key negotiation parameter. Without obtaining the security parameter, the shared key cannot be generated, and the second node cannot access the first node. Therefore, an attacker can be prevented from accessing the first node by using the second node, and the first node can be prevented from being successfully associated with an attacker having an untrusted identity.

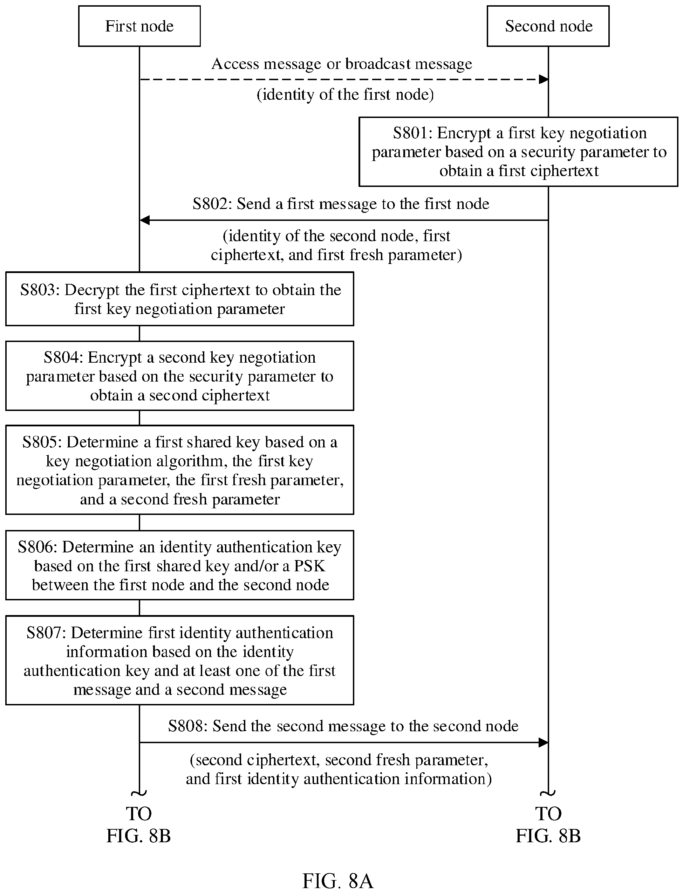

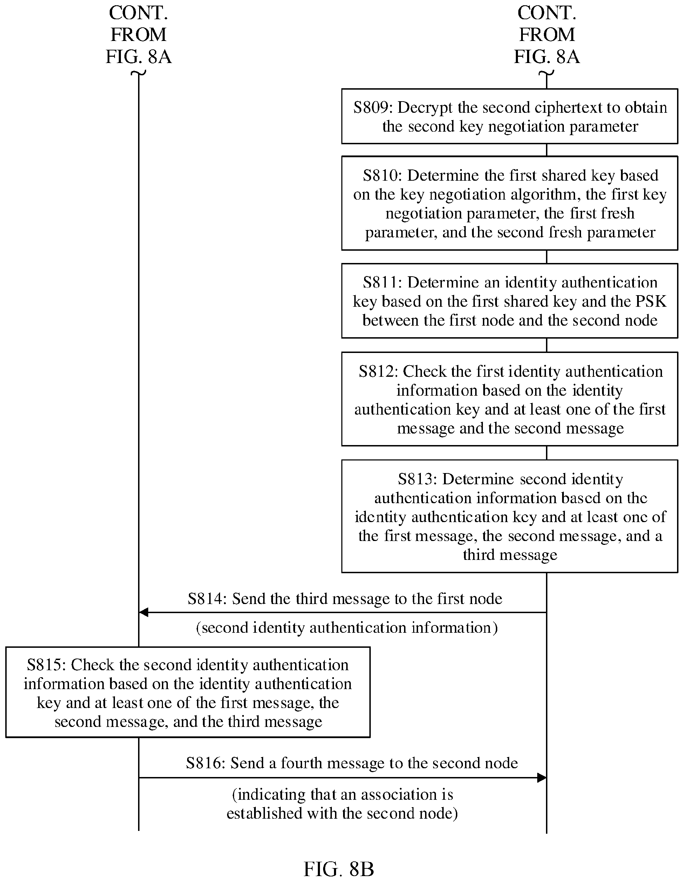

The method embodiments shown in FIG. 5 and FIG. 7 include a plurality of possible implementation solutions. The following describes some implementation solutions by using examples with reference to FIG. 8A and FIG. 8B. It should be noted that, for related concepts, operations, or logical relationships that are not explained in FIG. 8A and FIG. 8B, reference may be made to corresponding descriptions in the embodiments shown in FIG. 5 and FIG. 7.

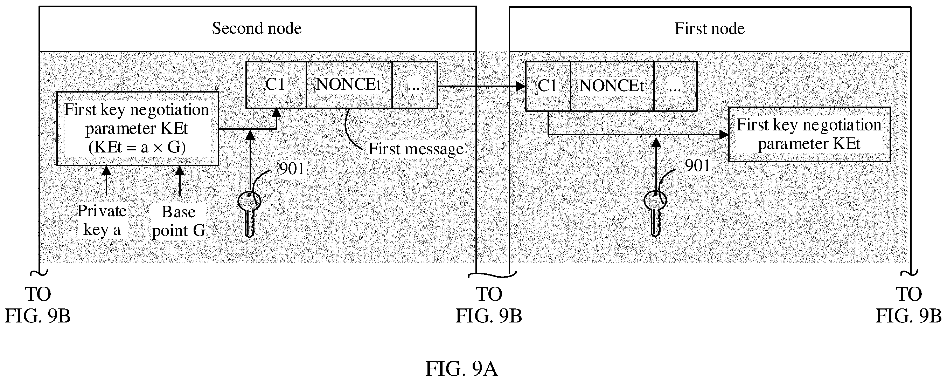

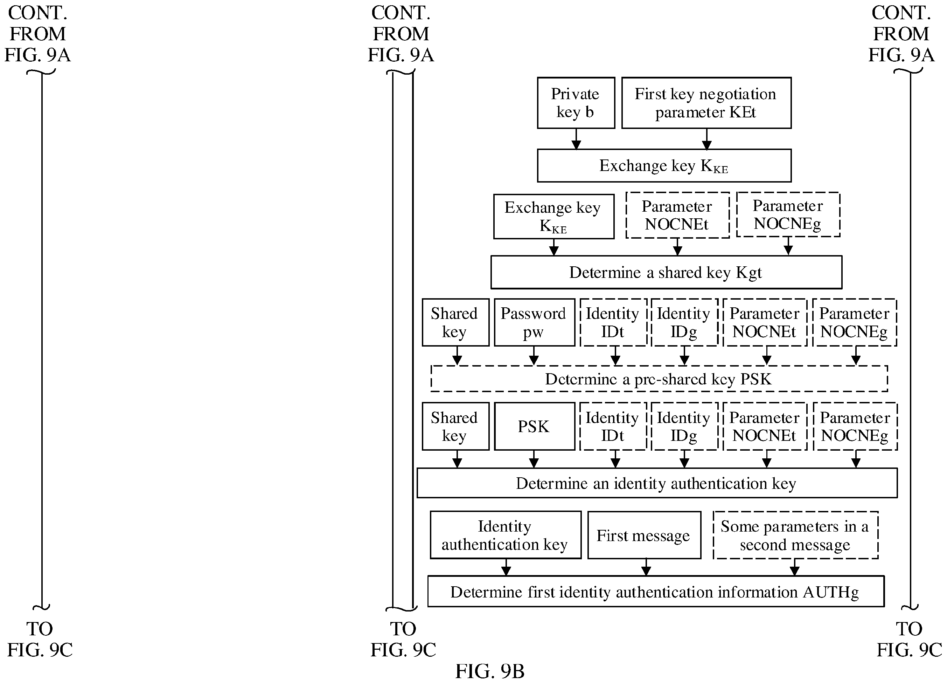

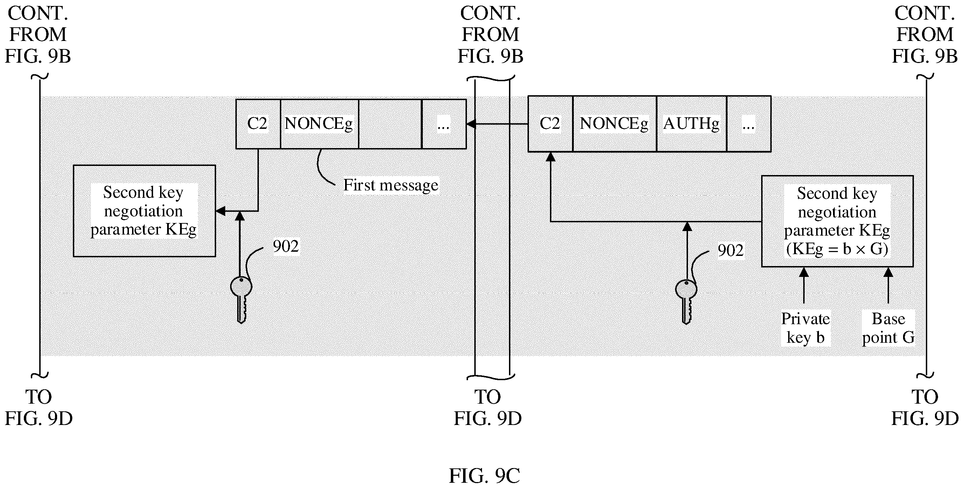

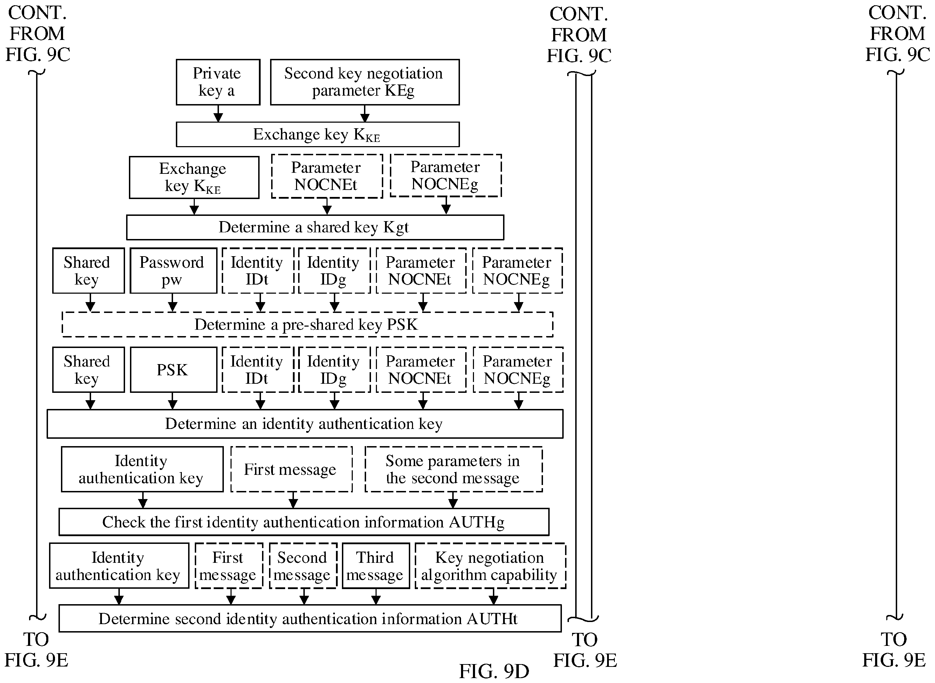

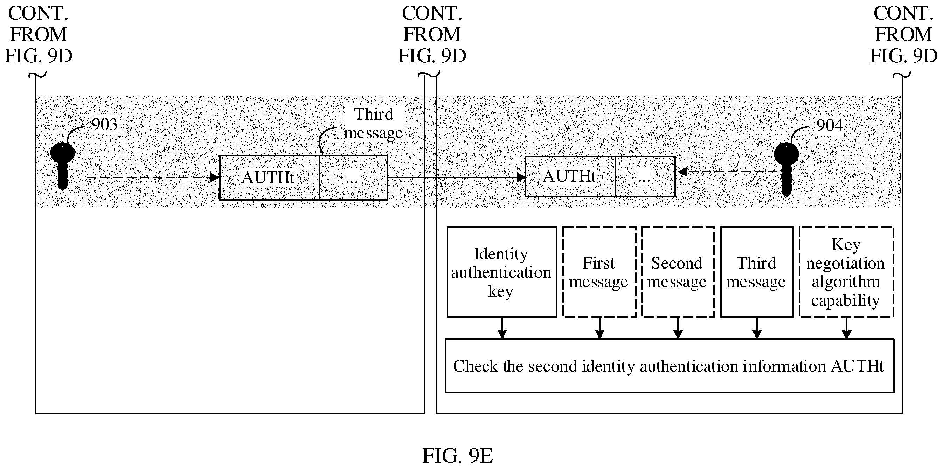

FIG. 8A and FIG. 8B are a secure access method according to an embodiment of this application. FIG. 9A to FIG. 9E are a possible schematic operational diagram of the secure access method. The method may be implemented based on the architecture shown in FIG. 3. The secure access method may include the following steps.

Step S801: A second node encrypts a first key negotiation parameter based on a security parameter to obtain a first ciphertext.

Specifically, the first key negotiation parameter is generally determined based on a private key of the second node. Referring to FIG. 9A to FIG. 9E and assuming that a key negotiation algorithm is an ECDH algorithm, the second node may determine the first key negotiation parameter KEt based on the private key a and a base point G.

Referring to FIG. 9A to FIG. 9E, the second node may encrypt the first key negotiation parameter KEt by using the security parameter 901, to obtain the first ciphertext C1. For a specific encryption mode, refer to detailed descriptions in step S501. Details are not described herein again.

Step S802: The second node sends a first message to a first node. The first message includes an identity of the second node, the first ciphertext, and a first fresh parameter NONCEt.

Step S803: The first node decrypts the first ciphertext to obtain the first key negotiation parameter.

Specifically, the first ciphertext is obtained based on the security parameter and the first key negotiation parameter. Therefore, the first node can decrypt the first ciphertext based on the security parameter to obtain the first key negotiation parameter. Referring to FIG. 9A to FIG. 9E, because the security parameter 901 is a parameter shared between the first node and the second node, the first node can decrypt the first ciphertext C1 based on the security parameter 901 to obtain the first key negotiation parameter KEt. For a specific decryption mode, refer to detailed descriptions in step S502. Details are not described herein again.

Step S804: The first node encrypts a second key negotiation parameter based on the security parameter to obtain a second ciphertext.

Generally, the second key negotiation parameter is determined based on a private key of the first node. Referring to FIG. 9A to FIG. 9E and assuming that the key negotiation algorithm is the ECDH algorithm, the first node may determine the second key negotiation parameter KEg based on the private key b and the base point G. For a specific encryption mode, refer to detailed descriptions in step S506. Details are not described herein again.

Step S805: The first node determines a first shared key based on the key negotiation algorithm, the first key negotiation parameter, the first fresh parameter, and a second fresh parameter.

Specifically, for example, referring to FIG. 9A to FIG. 9E, the first node may determine an exchange key $K_{KE}$ based on the private key b of the first node and the first key negotiation parameter KEt, and determine the first shared key Kgt based on the exchange key $K_{KE}$, the first fresh parameter NONCEt, and the second fresh parameter NONCEg.

In some possible scenarios, the first fresh parameter NONCEt and the second fresh parameter NONCEg are optional parameters (parameters and steps shown by dashed lines in FIG. 9A to FIG. 9E are optional parameters and steps).

Step S806: The first node determines an identity authentication key based on the first shared key and/or a PSK between the first node and the second node.

For details, refer to related descriptions in step S504. Details are not described herein again.

Referring to FIG. 9A to FIG. 9E, the identity authentication key Kauth generated by the first node may meet:

$$Kauth = KDF \ (Kgt||PSK, NONCEt, NOCNEg, IDg, IDt, \ authentication),$$

where "‖" may represent character string concatenation (this is merely an example; there may be no concatenation in a specific implementation process; for example, two separate input parameters are used), Kgt is the first shared key, NONCEt is the first fresh parameter, NOCNEg is the second fresh parameter, IDg is an identity of the first node, IDt is the identity of the second node, and "authentication" is a character string (which may be predefined or configured, or specified in a protocol). In some possible scenarios, NONCEt, NOCNEg, IDg, IDt, and "authentication" are optional parameters, and the first shared key Kgt may also be replaced with the exchange key $K_{KE}$.

Step S807: The first node determines first identity authentication information based on the identity authentication key and at least one of the first message and a second message.

For details, refer to detailed descriptions in step S505.

Step S808: The first node sends the second message to the second node. The second message includes the second ciphertext, the second fresh parameter, and the first identity authentication information.

Step S809: The second node decrypts the second ciphertext to obtain the second key negotiation parameter.

Specifically, the second ciphertext is obtained based on the security parameter and the second key negotiation parameter. Therefore, the second node can decrypt the second ciphertext based on the security parameter to obtain the second key negotiation parameter. Referring to FIG. 9A to FIG. 9E, because the security parameter 902 is a parameter shared between the first node and the second node, the first node can decrypt the first ciphertext C1 based on the security parameter 902 to obtain the second key negotiation parameter KEt. For a specific decryption mode, refer to detailed descriptions in step S507. Details are not described herein again.

It should be noted that, in a specific implementation process, the security parameter 901 and the security parameter 902 are usually a same parameter. For example, the second node uses the first password as the security parameter 901, and the first node also uses the first password as the security parameter 902. However, in some scenarios, the security parameter 901 and the security parameter 902 may be different parameters. For example, the first node uses a first public key as the security parameter 901, the second node uses a first private key as the security parameter 902, and the first public key and the first private key are a public-private key pair.

Step S810: The second node determines the first shared key based on the key negotiation algorithm, the second key negotiation parameter, the first fresh parameter, and the second fresh parameter.

For example, referring to FIG. 9A to FIG. 9E, the second node may determine the exchange key $K_{KE}$ based on the private key a of the second node and the second key negotiation parameter KEg, and determine the first shared key Kgt based on the exchange key $K_{KE}$, the first fresh parameter NONCEt, and the second fresh parameter NONCEg. The first fresh parameter NONCEt and the second fresh parameter NONCEg are optional parameters.

Step S811: The second node determines an identity authentication key based on the first shared key and the PSK between the first node and the second node.

For details, refer to related descriptions in step S504. Details are not described herein again.

Step S812: The second node checks the first identity authentication information based on the identity authentication key and at least one of the first message and the second message.

For details, refer to related descriptions in step S510. Details are not described herein again.

Step S813: The second node determines second identity authentication information based on the identity authentication key and at least one of the first message, the second message, and a third message.

For details, refer to detailed descriptions in step S509.

Step S814: The second node sends the third message to the first node, where the third message includes the second identity authentication information.

For details, refer to descriptions in step S511. Optionally, referring to FIG. 9A to FIG. 9E, the third message may be encrypted by using an encryption key 903. The encryption key may be derived based on the first shared key and the PSK.

Optionally, integrity protection may be further performed on the third message by using an integrity protection key.

Step S815: The first node checks the second identity authentication information based on the identity authentication key and at least one of the first message, the second message, and the third message.

For details, refer to related descriptions in step S512.

Optionally, the embodiment shown in FIG. 8A and FIG. 8B may further include step S816, specifically as follows:

Step S816: The first node sends a fourth message to the second node.

Optionally, referring to FIG. 9A to FIG. 9E, the fourth message may be encrypted by using the encryption key 903.

Optionally, integrity protection may be further performed on the fourth message by using an integrity protection key.

The methods in the embodiments of this application are described in detail above, and apparatuses in the embodiments of this application are provided below.

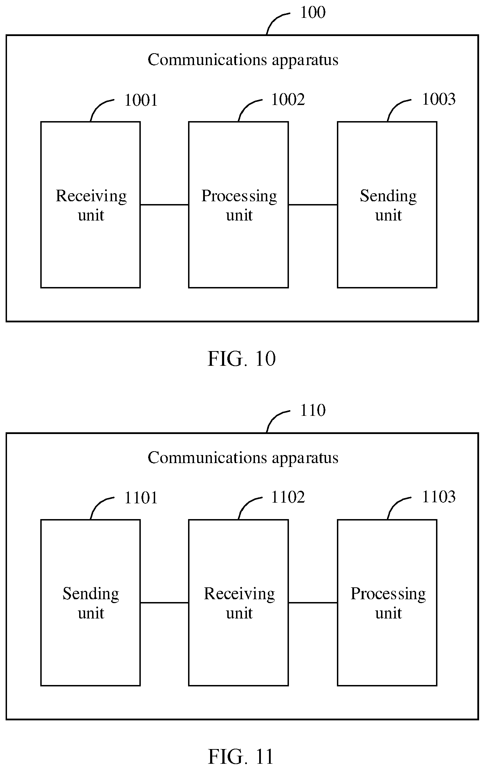

FIG. 10 is a schematic diagram of a structure of a communications apparatus 100 according to an embodiment of this application. The apparatus 100 may be a node, and may be referred to as a first node for ease of description. Certainly, the apparatus 100 may alternatively be a component in the first node, for example, a chip or an integrated circuit. The apparatus 100 may include a receiving unit 1001 and a processing unit 1002. The communications apparatus 100 is configured to implement the foregoing secure access method, for example, the secure access method in any embodiment shown in FIG. 5, FIG. 7, or FIG. 8A and FIG. 8B.

In a possible implementation, the receiving unit 1001 is configured to receive a first message from a second node, where the first message includes a first ciphertext, the first ciphertext is obtained based on a security parameter and a first key negotiation parameter, the security parameter is a pre-shared key PSK between the first node and the second node or is a first password, the first password is an agreed access password between the first node and the second node, the PSK between the first node and the second node is a secret value shared between the first node and the second node, and the first password may be considered as a password used by the second node to access the first node;

the processing unit 1002 is configured to decrypt the first ciphertext based on the security parameter to obtain the first key negotiation parameter; and

the processing unit 1002 is further configured to determine a first shared key based on the first key negotiation parameter and a key negotiation algorithm.

In this embodiment of this application, the second node encrypts the first key negotiation parameter based on the security parameter (the security parameter may be the PSK or the first password). Because the same security parameter may be preconfigured for the communications apparatus or the communications apparatus can obtain the same security parameter, the communications apparatus can decrypt the first ciphertext to obtain the first key negotiation parameter, and can subsequently generate the shared key based on the first key negotiation parameter. Without obtaining the security parameter, the shared key cannot be generated, and the second node cannot access the first node. Therefore, an attacker can be prevented from accessing the first node by using the second node, and the first node can be prevented from being successfully associated with an attacker having an untrusted identity.

In a possible implementation, the processing unit 1002 is further configured to:

obtain the PSK between the first node and the second node; and

obtain first identity authentication information based on the first shared key and the PSK between the first node and the second node, where the first identity authentication information is used to authenticate an identity of the first node.

The communications apparatus 100 may obtain the first identity authentication information based on the first shared key and the PSK, and the first identity authentication information may be used to authenticate the identity of the first node. In this application, a method for authenticating the identity of the first node by using the first identity information is illustrated: The second node determines a first shared key, and generates check information based on the first shared key and a PSK. If the check information is the same as the first identity authentication information, it indicates that the first shared key and the PSK on the first node are the same as those on the second node. In this way, the identity of the first node can be authenticated, communication between the node and an attacker is prevented, and security of the node is improved.

In another possible implementation, the processing unit 1002 is specifically configured to:

obtain the PSK between the first node and the second node based on a first correspondence; or

determine the PSK between the first node and the second node based on the first password, the first shared key, a first random number, and a second random number, where the first message further includes the first random number.

It can be learned that the first node may store a correspondence between the PSK and the second node in a form of a correspondence. Therefore, the communications apparatus 100 can obtain the PSK between the first node and the second node based on the first relationship.

In a possible design, the PSK is determined based on the first password, the first shared key, the first random number, and the second random number. If the first node is associated with the second node for the first time or the first node has not obtained the first correspondence, the first node does not have the PSK corresponding to an identity of the second node, and therefore the communications apparatus 100 can determine a new PSK.

In still another possible implementation, the processing unit 1002 is specifically configured to:

determine a second shared key based on the first shared key, the first random number, and the second random number; and

determine the PSK between the first node and the second node based on the first password, the second shared key, the first random number, and the second random number.

In still another possible implementation, the first ciphertext is obtained based on a hash value of the security parameter and the first key negotiation parameter; and the processing unit 1002 is specifically configured to:
decrypt the first ciphertext based on the hash value of the security parameter to obtain the first key negotiation parameter.

In still another possible implementation, the first ciphertext is obtained by performing an elliptic curve point addition operation based on the hash value of the security parameter and the first key negotiation parameter; and the processing unit 1002 is specifically configured to:
obtain the first key negotiation parameter by performing an elliptic curve point subtraction operation based on the hash value of the security parameter and the first ciphertext.

In still another possible implementation, the processing unit 1002 is specifically configured to:

determine a first intermediate key based on the hash value of the security parameter and the first random number; and
decrypt the first ciphertext based on the first intermediate key to obtain the first key negotiation parameter.

In still another possible implementation, the processing unit 1002 is specifically configured to:

derive a first key based on the first shared key, the PSK, the first random number, and the second random number; and
generate the first identity authentication information based on the first key, the first random number, and the second random number, where the first identity authentication information is used to authenticate the identity of the first node.

In still another possible implementation, the processing unit 1002 is further configured to encrypt a second key negotiation parameter based on the security parameter to obtain a second ciphertext; and
the apparatus 100 further includes a sending unit 1003, configured to send a second message to the second node, where the second message includes the first identity authentication information and the second ciphertext, and the second ciphertext is used by the second node to determine the first shared key.

The second key negotiation parameter is used by the second node to determine the shared key. It can be learned that the communications apparatus 100 can encrypt the second key negotiation parameter based on the security parameter and that the second key negotiation parameter can be decrypted to generate the shared key only after the security parameter is cracked. This prevents an attacker from masquerading as the second node to access the apparatus 100, and ensures security of a key negotiation process.

In still another possible implementation, the receiving unit 1001 is further configured to receive a third message from the second node, where the third message includes second identity authentication information; and
the processing unit 1002 is further configured to determine, based on the PSK between the first node and the second node, the first shared key, and the second identity authentication information, that identity authentication of the second node succeeds.

The foregoing describes a method for authenticating the identity of the second node. The second identity authentication information is generated by the second node based on the PSK and the first shared key. Therefore, the communications apparatus 100 can determine, based on the PSK, the first shared key, and the second identity authentication information, whether the first shared key and the PSK on the second node are the same as those on the first node, so that the identity of the second node can be authenticated.

In still another possible implementation, the first message may also be referred to as an access request message (or an association request message). Further, the second message may also be referred to as a security context request message (or an identity authentication request message). The third message may also be referred to as a security context response message (or an identity authentication response message).

In still another possible implementation, the sending unit 1003 is further configured to send a fourth message to the second node, where the fourth message is used to indicate that access succeeds, or used to indicate that the association is complete. Further, the fourth message may be referred to as an association establishment message (or an access association complete message), an association complete message, or the like.

It should be noted that, for implementation of each unit, reference may be made to the corresponding descriptions of the embodiment shown in FIG. 5 or FIG. 8A and FIG. 8B. The communications apparatus 100 may be the first node in the embodiment shown in FIG. 5 or FIG. 8A and FIG. 8B.

It may be understood that, in the apparatus embodiments of this application, division into a plurality of units or modules is merely logical division based on functions, and is not intended to limit a specific structure of the apparatus. In specific implementation, some functional modules may be subdivided into smaller functional modules, and some functional modules may also be combined into one functional module. However, regardless of whether these functional modules are subdivided or combined, a general procedure performed by the apparatus 100 in the secure access process is the same. For example, the receiving unit 1001 and the sending unit 1003 in the apparatus 100 may also be integrated into a communications unit, and the communications unit may implement functions implemented by the receiving unit 1001 and the sending unit 1003. Usually, each unit corresponds to respective program code (or program instructions). When the program code corresponding to the unit is run on a processor, the unit is controlled by the processing unit to perform a corresponding procedure to implement a corresponding function.

FIG. 11 is a schematic diagram of a structure of a communications apparatus 110 according to an embodiment of this application. The apparatus 110 may be a node, and may be referred to as a second node for ease of description. Certainly, the apparatus 110 may alternatively be a component in the first node, for example, a chip or an integrated circuit. The apparatus 110 may include a sending unit 1101, a receiving unit 1102, and a processing unit 1103. The communications apparatus 110 is configured to implement the foregoing secure access method, for example, the secure access method in any embodiment shown in FIG. 5, FIG. 7, or FIG. 8A and FIG. 8B.

In a possible implementation, the sending unit 1101 is configured to send a first message to a first node, where the first message includes a first ciphertext, the first ciphertext is obtained based on a security parameter and a first key negotiation parameter, the security parameter is a pre-shared key PSK between the first node and the second node or is a first password, and the first password is an agreed access password between the first node and the second node;

the receiving unit 1102 is configured to receive a second message from the first node, where the second message includes a second ciphertext, and the second ciphertext is obtained by encrypting a second key negotiation parameter based on the security parameter;
the processing unit 1103 is configured to decrypt the second ciphertext based on the security parameter to obtain the second key negotiation parameter;
the processing unit 1103 is further configured to determine a first shared key based on the second key negotiation parameter and a key negotiation algorithm; and
the processing unit 1103 is further configured to obtain second identity authentication information based on the first shared key and the PSK between the first node and the second node, where the second identity authentication information is used to authenticate an identity of the second node.

In this embodiment of this application, the communications apparatus 110 encrypts the first key negotiation parameter based on the security parameter (the security parameter may be the PSK or the first password) and then sends the encrypted first key negotiation parameter to the first node. Correspondingly, the first node also encrypts the second key negotiation parameter based on the security parameter. The two communication parties may decrypt the ciphertext based on the security parameter, and generate the shared key based on the key negotiation parameter. Without obtaining the security parameter, the shared key cannot be generated, and the second node cannot access the first node. Therefore, the second node can be prevented from accessing the first node that is untrusted, and security of the second node is improved.

In a possible implementation, the processing unit 1103 is further configured to:
obtain the PSK between the first node and the second node.

In another possible implementation, the processing unit 1103 is specifically configured to:

obtain the PSK between the first node and the second node based on a second correspondence; or
determine the PSK between the first node and the second node based on the first password, the first shared key, a first random number, and a second random number, where the first message further includes the first random number, and the first message includes the first random number.

It can be learned that a correspondence between the PSK and the first node may be stored in a form of a correspondence. Therefore, the communications apparatus 110 can obtain the PSK between the first node and the second node based on the correspondence.

In a possible design, the PSK is determined based on the first password, the first shared key, the first random number, and the second random number. If the first node is associated with the second node for the first time or the first node has not obtained the first correspondence, the second node does not have the PSK corresponding to the first node, and therefore the communications apparatus 110 can determine a new PSK in the foregoing manner.

In still another possible implementation, the processing unit 1103 is specifically configured to:

determine a second shared key based on the first shared key, the first random number, and the second random number; and
determine the PSK between the first node and the second node based on the first password, the second shared key, the first random number, and the second random number.

In still another possible implementation, the processing unit 1103 is further configured to:
encrypt the first key negotiation parameter based on the security parameter to obtain the first ciphertext.

In still another possible implementation, the processing unit 1103 is specifically configured to:

encrypt the first key negotiation parameter based on a hash value of the security parameter to obtain the first ciphertext; or
obtain the first ciphertext by performing an elliptic curve point addition operation based on a hash value of the security parameter and the first key negotiation parameter; or
determine a first intermediate key based on a hash value of the security parameter and the first random number; and encrypt the first key negotiation parameter based on the first intermediate key to obtain the first ciphertext.

In still another possible implementation, the processing unit 103 is specifically configured to:

derive a first key based on the first shared key, the PSK, the first random number, and the second random number; and generate the second identity authentication information based on the first key, the first random number, and the second random number, where the first identity authentication information is used to authenticate the identity of the first node.

In still another possible implementation, the second message further includes first identity authentication information; and the processing unit 1103 is further configured to:
determine, based on the PSK between the first node and the second node, the first shared key, and the first identity authentication information, that identity authentication of the first node succeeds.

The foregoing describes a method for authenticating an identity of the first node. The first identity authentication information is generated by the first node based on the PSK and the first shared key. Therefore, it can be determined, based on the PSK, the first shared key, and the first identity authentication information, whether the first shared key and the PSK on the first node are the same as those on the second node, so that the identity of the first node can be authenticated. It should be noted that an occasion for authenticating the identity of the first node may be periodic or aperiodic, or the identity of the first node may be authenticated before some important operations are performed, which depends on implementation in specific implementation.

In still another possible implementation, the first message may also be referred to as an access request message (or an association request message). Further, the second message may also be referred to as a security context request message (or an identity authentication request message). The third message may also be referred to as a security context response message (or an identity authentication response message).

In still another possible implementation, the receiving unit 1102 is further configured to receive a fourth message from the first node, where the fourth message is used to indicate that access succeeds, or used to indicate that the association is complete. Further, the fourth message may be referred to as an association establishment message (or an access association complete message), an association complete message, or the like.

It should be noted that, for implementation of each unit, reference may be made to the corresponding descriptions of the embodiment shown in FIG. 5 or FIG. 8A and FIG. 8B. The communications apparatus 110 may be the second node in the embodiment shown in FIG. 5 or FIG. 8A and FIG. 8B.

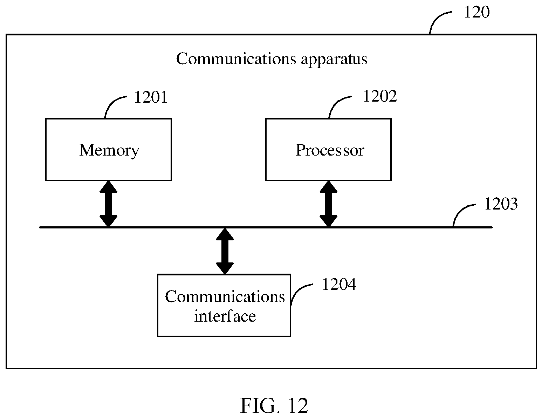

FIG. 12 is a schematic diagram of a structure of a communications apparatus 120 according to an embodiment of this application. The communications apparatus 120 may be a node, or may be a component in a node, for example, a chip or an integrated circuit. The apparatus 120 may include at least one processor 1202 and a communications interface 1204. Further, optionally, the communications apparatus may further include at least one memory 1201. Further, optionally, the communications apparatus may further include a bus 1203. The memory 1201, the processor 1202, and the communications interface 1204 are connected by using the bus 1203.

The memory 1201 is configured to provide storage space, and the storage space may store data such as an operating system and a computer program. The memory 1201 may be one or a combination of a random access memory (random access memory, RAM), a read-only memory (read-only memory, ROM), an erasable programmable read-only memory (erasable programmable read only memory, EPROM), a compact disc read-only memory (compact disc read-only memory, CD-ROM), and the like.

The processor 1202 is a module that performs an arithmetic operation and/or a logic operation, and may be specifically one or a combination of processing modules such as a central processing unit (central processing unit, CPU), a graphics processing unit (graphics processing unit, GPU), a microprocessor unit (microprocessor unit, MPU), an application specific integrated circuit (Application Specific Integrated Circuit, ASIC), a field programmable gate array (Field Programmable Gate Array, FPGA), a complex programmable logic device (Complex programmable logic device, CPLD), a coprocessor (assisting the central processing unit in completing corresponding processing and application), and a micro control unit (Microcontroller Unit, MCU).

The communications interface 1204 may be configured to provide an information input or output for the at least one processor; and/or the communications interface may be configured to receive data sent from the outside and/or send data to the outside, and may be a wired link interface including an Ethernet cable or the like, or may be a wireless link (Wi-Fi, Bluetooth, universal wireless transmission, an in-vehicle short-range communications technology, or the like) interface. Optionally, the communications interface 1204 may further include a transmitter (for example, a radio frequency transmitter or an antenna), a receiver, or the like that is coupled to the interface.

The processor 1202 in the apparatus 120 is configured to read the computer program stored in the memory 1201, to perform the foregoing secure access method, for example, the secure access method described in the embodiment shown in FIG. 5, FIG. 7, or FIG. 8A and FIG. 8B.

In a design, the communications apparatus 120 may be the first node in the embodiment shown in FIG. 5, FIG. 7, or FIG. 8A and FIG. 8B. The processor 1202 in the apparatus 120 is configured to read the computer program stored in the memory 1201, to perform the following operations:

receiving a first message from a second node by using the communications interface 1204, where the first message includes a first ciphertext, the first ciphertext is obtained based on a security parameter and a first key negotiation parameter, the security parameter is a pre-shared key PSK between the first node and the second node or is a first password, the first password is an agreed access password between the first node and the second node, the PSK between the first node and the second node is a secret value shared between the first node and the second node, and the first password may be considered as a password used by the second node to access the first node; decrypting the first ciphertext based on the security parameter to obtain the first key negotiation parameter; and determining a first shared key based on the first key negotiation parameter and a key negotiation algorithm.

In this embodiment of this application, the second node encrypts the first key negotiation parameter by using the security parameter (the security parameter may be the PSK or the first password), to obtain the first ciphertext. Because the same security parameter may be preconfigured for the communications apparatus 120 or the communications apparatus 120 can obtain the same security parameter, the communications apparatus 120 can decrypt the first ciphertext to obtain the first key negotiation parameter, and can subsequently generate the shared key based on the first key negotiation parameter. Without obtaining the security parameter, the shared key cannot be generated, and the second node cannot access the first node. Therefore, an attacker can be prevented from accessing the first node by using the second node, and the first node can be prevented from being successfully associated with an attacker having an untrusted identity.

In a possible implementation, the processor 1202 is further configured to:

obtain the PSK between the first node and the second node; and
obtain first identity authentication information based on the first shared key and the PSK between the first node and the second node, where the first identity authentication information is used to authenticate an identity of the first node.

The second node may obtain the first identity authentication information based on the first shared key and the PSK, and the first identity authentication information may be used to authenticate the identity of the first node. In this application, a method for authenticating the identity of the first node by using the first identity information is illustrated: The second node determines a first shared key, and generates check information based on the first shared key and a PSK. If the check information is the same as the first identity authentication information, it indicates that the first shared key and the PSK on the first node are the same as those on the second node. In this way, the identity of the first node can be authenticated, communication between the node and an attacker is prevented, and security of the node is improved.

In another possible implementation, the processor 1202 is specifically configured to:

obtain the PSK between the first node and the second node based on a first correspondence; or
determine the PSK between the first node and the second node based on the first password, the first shared key, a first random number, and a second random number, where the first message further includes the first random number.

It can be learned that the first node may store a correspondence between the PSK and the second node in a form of a correspondence. Therefore, the communications apparatus 120 can obtain the PSK between the first node and the second node based on the first relationship.

In a possible design, the PSK is determined based on the first password, the first shared key, the first random number, and the second random number. If the first node is associated with the second node for the first time or the first node has not obtained the first correspondence, the first node does not have the PSK corresponding to an identity of the second node, and therefore the communications apparatus 120 can determine a new PSK.

In still another possible implementation, the processor 1202 is specifically configured to:

determine a second shared key based on the first shared key, the first random number, and the second random number; and

determine the PSK between the first node and the second node based on the first password, the second shared key, the first random number, and the second random number.

In still another possible implementation, the first ciphertext is obtained based on a hash value of the security parameter and the first key negotiation parameter; and the processor 1202 is specifically configured to: decrypt the first ciphertext based on the hash value of the security parameter to obtain the first key negotiation parameter.

In still another possible implementation, the first ciphertext is obtained by performing an elliptic curve point addition operation based on the hash value of the security parameter and the first key negotiation parameter; and the processor 1202 is specifically configured to:

obtain the first key negotiation parameter by performing an elliptic curve point subtraction operation based on the hash value of the security parameter and the first ciphertext.

In still another possible implementation, the processor 1202 is specifically configured to:

determine a first intermediate key based on the hash value of the security parameter and the first random number; and decrypt the first ciphertext based on the first intermediate key to obtain the first key negotiation parameter.

In still another possible implementation, the processor 1202 is specifically configured to:

derive a first key based on the first shared key, the PSK, the first random number, and the second random number; and generate the first identity authentication information based on the first key, the first random number, and the second random number, where the first identity authentication information is used to authenticate the identity of the first node.

In still another possible implementation, the processor 1202 is further configured to:

encrypt a second key negotiation parameter based on the security parameter to obtain a second ciphertext; and send a second message to the second node by using the communications interface 1204, where the second message includes the first identity authentication information and the second ciphertext, and the second ciphertext is used by the second node to determine the first shared key.

The second key negotiation parameter is used by the second node to determine the shared key. It can be learned that the communications apparatus 120 can encrypt the second key negotiation parameter based on the security parameter and that the second key negotiation parameter can be decrypted to generate the shared key only after the security parameter is cracked. This prevents an attacker from masquerading as the second node to access the apparatus 120, and ensures security of a key negotiation process.

In still another possible implementation, the processor 1202 is further configured to:

receive a third message from the second node by using the communications interface 1204, where the third message includes second identity authentication information; and

determine, based on the PSK between the first node and the second node, the first shared key, and the second identity authentication information, that identity authentication of the second node succeeds.

The foregoing describes a method for authenticating the identity of the second node. The second identity authentication information is generated by the second node based on the PSK and the first shared key. Therefore, the communications apparatus 120 can determine, based on the PSK, the first shared key, and the second identity authentication information, whether the first shared key and the PSK on the second node are the same as those on the first node, so that the identity of the second node can be authenticated.

In still another possible implementation, the first message may also be referred to as an access request message (or an association request message). Further, the second message may also be referred to as a security context request message (or an identity authentication request message). The third message may also be referred to as a security context response message (or an identity authentication response message).

In still another possible implementation, the processor 1202 is further configured to:

send a fourth message to the second node by using the communications interface, where the fourth message is used to indicate that access succeeds, or used to indicate that the association is complete. Further, the fourth message may be referred to as an association establishment message (or an access association complete message), an association complete message, or the like.

For specific implementation, refer to the detailed descriptions in the embodiment shown in FIG. 3 or FIG. 5. Details are not described herein again.

In a design, the communications apparatus 120 may be the second node in the embodiment shown in FIG. 5, FIG. 7, or FIG. 8A and FIG. 8B. The processor 1202 in the apparatus 120 is configured to read the computer program stored in the memory 1201, to perform the following operations:

sending a first message to a first node by using the communications interface 1204, where the first message includes a first ciphertext, the first ciphertext is obtained based on a security parameter and a first key negotiation parameter, the security parameter is a pre-shared key PSK between the first node and the second node or is a first password, and the first password is an agreed access password between the first node and the second node;

receiving a second message from the first node by using the communications interface 1204, where the second message includes a second ciphertext, and the second ciphertext is obtained by encrypting a second key negotiation parameter based on the security parameter;

decrypting the second ciphertext based on the security parameter to obtain the second key negotiation parameter;

determining a first shared key based on the second key negotiation parameter and a key negotiation algorithm; and

obtaining second identity authentication information based on the first shared key and the PSK between the first node and the second node, where the second identity authentication information is used to authenticate an identity of the second node.

In this embodiment of this application, the communications apparatus 120 encrypts the first key negotiation parameter based on the security parameter (the security parameter may be the PSK or the first password) and then sends the encrypted first key negotiation parameter to the first node. Correspondingly, the first node also encrypts the second key negotiation parameter based on the security parameter. The two communication parties may decrypt the ciphertext based on the security parameter, and generate the shared key based on the key negotiation parameter. Without obtaining the security parameter, the shared key cannot be generated, and the second node cannot access the first node. Therefore, the second node can be prevented from accessing the first node that is untrusted, and security of the second node is improved.

In a possible implementation, the processor 1202 is further configured to:
obtain the PSK between the first node and the second node.

In another possible implementation of the sixth aspect, the processor is specifically configured to:

obtain the PSK between the first node and the second node based on a second correspondence; or
determine the PSK between the first node and the second node based on the first password, the first shared key, a first random number, and a second random number, where the first message further includes the first random number, and the first message includes the first random number.

It can be learned that a correspondence between the PSK and the first node may be stored in a form of a correspondence. Therefore, the communications apparatus 120 can obtain the PSK between the first node and the second node based on the correspondence.

In a possible design, the PSK is determined based on the first password, the first shared key, the first random number, and the second random number. If the first node is associated with the second node for the first time or the first node has not obtained the first correspondence, the second node does not have the PSK corresponding to the first node, and therefore the communications apparatus 120 can determine a new PSK in the foregoing manner.

In still another possible implementation, the processor 1202 is specifically configured to:

determine a second shared key based on the first shared key, the first random number, and the second random number; and
determine the PSK between the first node and the second node based on the first password, the second shared key, the first random number, and the second random number.

In still another possible implementation, the processor 1202 is further configured to:
encrypt the first key negotiation parameter based on the security parameter to obtain the first ciphertext.

In still another possible implementation, the processor 1202 is specifically configured to:

encrypt the first key negotiation parameter based on a hash value of the security parameter to obtain the first ciphertext; or

obtain the first ciphertext by performing an elliptic curve point addition operation based on a hash value of the security parameter and the first key negotiation parameter; or

determine a first intermediate key based on a hash value of the security parameter and the first random number; and encrypt the first key negotiation parameter based on the first intermediate key to obtain the first ciphertext.

In still another possible implementation, the processor 1202 is specifically configured to:

derive a first key based on the first shared key, the PSK, the first random number, and the second random number; and generate the second identity authentication information based on the first key, the first random number, and the second random number, where the first identity authentication information is used to authenticate the identity of the first node.

In still another possible implementation, the second message further includes first identity authentication information; and the processor 1202 is further configured to:
determine, based on the PSK between the first node and the second node, the first shared key, and the first identity authentication information, that identity authentication of the first node succeeds.

The foregoing describes a method for authenticating an identity of the first node. The first identity authentication information is generated by the first node based on the PSK and the first shared key. Therefore, it can be determined, based on the PSK, the first shared key, and the first identity authentication information, whether the first shared key and the PSK on the first node are the same as those on the second node, so that the identity of the first node can be authenticated. It should be noted that an occasion for authenticating the identity of the first node may be periodic or aperiodic, or the identity of the first node may be authenticated before some important operations are performed, which depends on implementation in specific implementation.

In still another possible implementation, the first message may also be referred to as an access request message (or an association request message). Further, the second message may also be referred to as a security context request message (or an identity authentication request message). The third message may also be referred to as a security context response message (or an identity authentication response message).

In still another possible implementation, the processor 1202 is further configured to:
receive a fourth message from the first node by using the communications interface 1204, where the fourth message is used to indicate that access succeeds, or used to indicate that the association is complete. Further, the fourth message may be referred to as an association establishment message (or an access association complete message), an association complete message, or the like.

For specific implementation, refer to the detailed descriptions in the embodiment shown in FIG. 5, FIG. 7, or FIG. 8A and FIG. 8B. Details are not described herein again.

An embodiment of this application further provides a computer-readable storage medium. The computer-readable storage medium stores a computer program. When the computer program is run on one or more processors, the method in the embodiment shown in FIG. 5, FIG. 7, or FIG. 8A and FIG. 8B is implemented.

An embodiment of this application further provides a chip system. The chip system includes at least one processor and a communications interface. The communications interface is configured to send and/or receive data, and the at least one processor is configured to invoke a computer program stored in at least one memory, to implement the method in the embodiment shown in FIG. 5, FIG. 7, or FIG. 8A and FIG. 8B.

Further, the at least one processor may include at least one of a CPU, an MPU, an MCU, or a coprocessor.

An embodiment of this application further provides a terminal. The terminal may be an intelligent cockpit product, a vehicle, or the like, and the terminal includes a first node and/or a second node. The first node (for example, one or more of modules such as a camera, a screen, a microphone, a speaker, a radar, an electronic key, a passive entry passive start system controller, and user equipment UE) is the first node in the embodiment shown in FIG. 5, FIG. 7, or FIG. 8A and FIG. 8B. The second node (for example, a base station or a vehicle cockpit domain controller CDC) is the second node in the embodiment shown in FIG. 5, FIG. 7, or FIG. 8A and FIG. 8B.

Further, optionally, the terminal may be an unmanned aerial vehicle, a robot, a device in a smart home scenario, a device in a smart manufacturing scenario, or the like.

An embodiment of this application further provides a computer program product. When the computer program product is run on one or more processors, the communication method described in the embodiment shown in FIG. 5, FIG. 7, or FIG. 8A and FIG. 8B can be implemented.

All or some of the foregoing embodiments may be implemented by software, hardware, firmware, or any combination thereof.

When software is used to implement the embodiments, all or some of the embodiments may be implemented in a form of a computer instruction product.

When the computer instructions are loaded and executed on a computer, all or some of the procedures or functions according to the embodiments of this application can be implemented. The computer may be a general-purpose computer, a special-purpose computer, a computer network, or another programmable apparatus. The computer instructions may be stored in a computer-readable storage medium, or may be transmitted by using a computer-readable storage medium. The computer-readable storage medium may be any usable medium accessible by the computer, or may be a data storage device, such as a server or a data center that integrates one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Sequence adjustment, combination, and deletion may be performed on the steps in the method embodiments of this application based on an actual requirement.

Combination, division, and deletion may be performed on the modules in the apparatus embodiments of this application based on an actual requirement.

## Claims

1. A secure access method, wherein the method comprises:

   receiving a first message from a second node, wherein the first message comprises a first ciphertext, the first ciphertext is obtained based on a security parameter and a first key negotiation parameter, the security parameter is a pre-shared key PSK between a first node and the second node or is a first password, and the first password is an agreed access password between the first node and the second node;
   decrypting the first ciphertext based on the security parameter to obtain the first key negotiation parameter;
   determining a first shared key based on the first key negotiation parameter and a key negotiation algorithm;
   obtaining the PSK between the first node and the second node; and
   obtaining first identity authentication information based on the first shared key and the PSK between the first node and the second node, wherein the first identity authentication information is used to authenticate an identity of the first node.

2. The method according to claim 1, wherein the obtaining the PSK between the first node and the second node comprises:

   obtaining the PSK between the first node and the second node based on a first correspondence; or
   determining the PSK between the first node and the second node based on the first password, the first shared key, a first random number, and a second random number, wherein the first message further comprises the first random number.

3. The method according to claim 1 or 2, wherein the first ciphertext is obtained based on a hash value of the security parameter and the first key negotiation parameter; and the decrypting the first ciphertext based on the first password to obtain the first key negotiation parameter comprises:
   decrypting the first ciphertext based on the hash value of the security parameter to obtain the first key negotiation parameter.

4. The method according to claim 3, wherein the first ciphertext is obtained by performing an elliptic curve point addition operation based on the hash value of the security parameter and the first key negotiation parameter; and the decrypting the first ciphertext based on the first password to obtain the first key negotiation parameter comprises:
   obtaining the first key negotiation parameter by performing an elliptic curve point subtraction operation based on the hash value of the security parameter and the first ciphertext.

5. The method according to claim 3, wherein the decrypting the first ciphertext based on the security parameter to obtain the first key negotiation parameter comprises:

   determining a first intermediate key based on the hash value of the security parameter and the first random number; and
   decrypting the first ciphertext based on the first intermediate key to obtain the first key negotiation parameter.

6. The method according to any one of claims 1 to 5, wherein the obtaining first identity authentication information based on the first shared key and the PSK between the first node and the second node comprises:

deriving a first key based on the first shared key, the PSK, the first random number, and the second random number; and
generating the first identity authentication information based on the first key, the first random number, and the second random number, wherein the first identity authentication information is used to authenticate the identity of the first node.

7. The method according to any one of claims 1 to 6, wherein the method further comprises:

encrypting a second key negotiation parameter based on the security parameter to obtain a second ciphertext; and
sending a second message to the second node, wherein the second message comprises the first identity authentication information and the second ciphertext, and the second ciphertext is used by the second node to determine the first shared key.

8. The method according to claim 7, wherein the encrypting a second key negotiation parameter based on the security parameter to obtain a second ciphertext comprises:

encrypting the second key negotiation parameter based on the hash value of the security parameter to obtain the second ciphertext; or
obtaining the second ciphertext by performing an elliptic curve point addition operation based on the hash value of the security parameter and the second key negotiation parameter; or
determining a second intermediate key based on the hash value of the security parameter and the second random number; and
encrypting the second key negotiation parameter based on the second intermediate key to obtain the second ciphertext.

9. The method according to claim 7 or 8, wherein the method further comprises:

receiving a third message from the second node, wherein the third message comprises second identity authentication information; and
determining, based on the PSK between the first node and the second node, the first shared key, and the second identity authentication information, that identity authentication of the second node succeeds.

10. A secure access method, wherein the method comprises:

sending a first message to a first node, wherein the first message comprises a first ciphertext, the first ciphertext is obtained based on a security parameter and a first key negotiation parameter, the security parameter is a pre-shared key PSK between the first node and a second node or is a first password, and the first password is an agreed access password between the first node and the second node;
receiving a second message from the first node, wherein the second message comprises a second ciphertext, and the second ciphertext is obtained by encrypting a second key negotiation parameter based on the security parameter;
decrypting the second ciphertext based on the security parameter to obtain the second key negotiation parameter;
determining a first shared key based on the second key negotiation parameter and a key negotiation algorithm; and
obtaining second identity authentication information based on the first shared key and the PSK between the first node and the second node, wherein the second identity authentication information is used to authenticate an identity of the second node.

11. The method according to claim 10, wherein before the obtaining second identity authentication information based on the first shared key and the PSK between the first node and the second node, the method further comprises:
obtaining the PSK between the first node and the second node.

12. The method according to claim 10 or 11, wherein the obtaining the PSK between the first node and the second node comprises:

obtaining the PSK between the first node and the second node based on a second correspondence; or determining the PSK between the first node and the second node based on the first password, the first shared key, a first random number, and a second random number, wherein the first message further comprises the first random number, and the first message comprises the first random number.

13. The method according to any one of claims 10 to 12, wherein before the sending a first message, the method further comprises:
encrypting the first key negotiation parameter based on the security parameter to obtain the first ciphertext.

14. The method according to claim 13, wherein the encrypting the first key negotiation parameter based on the security parameter to obtain the first ciphertext comprises:

encrypting the first key negotiation parameter based on a hash value of the security parameter to obtain the first ciphertext; or
obtaining the first ciphertext by performing an elliptic curve point addition operation based on a hash value of the security parameter and the first key negotiation parameter; or
determining a first intermediate key based on a hash value of the security parameter and the first random number; and
encrypting the first key negotiation parameter based on the first intermediate key to obtain the first ciphertext.

15. The method according to any one of claims 10 to 14, wherein the second ciphertext is obtained based on the hash value of the security parameter and the second key negotiation parameter; and the decrypting the second ciphertext based on the security parameter to obtain the second key negotiation parameter comprises:
decrypting the second ciphertext based on the hash value of the security parameter to obtain the second key negotiation parameter.

16. The method according to claim 15, wherein the first ciphertext is obtained by performing an elliptic curve point addition operation based on the hash value of the security parameter and the first key negotiation parameter; and the decrypting the second ciphertext based on the hash value of the security parameter to obtain the second key negotiation parameter comprises:
obtaining the second key negotiation parameter by performing an elliptic curve point subtraction operation based on the hash value of the security parameter and the second ciphertext.

17. The method according to claim 15, wherein the decrypting the second ciphertext based on the security parameter to obtain the second key negotiation parameter comprises:

determining a second intermediate key based on the hash value of the security parameter and the second random number; and
decrypting the second ciphertext based on the second intermediate key to obtain the second key negotiation parameter.

18. The method according to any one of claims 10 to 17, wherein the obtaining second identity authentication information based on the first shared key and the PSK between the first node and the second node further comprises:

deriving a first key based on the first shared key, the PSK, the first random number, and the second random number; and
generating the second identity authentication information based on the first key, the first random number, and the second random number, wherein the second identity authentication information is used to authenticate the identity of the second node.

19. The method according to claim 18, wherein the second message further comprises first identity authentication information; and before the obtaining second identity authentication information based on the first shared key and the PSK between the first node and the second node, the method further comprises:
determining, based on the first identity authentication information, the first shared key, and the PSK, that identity authentication of the first node succeeds.

20. A communications apparatus, comprising:

a receiving unit, configured to receive a first message from a second node, wherein the first message comprises a first ciphertext, the first ciphertext is obtained based on a security parameter and a first key negotiation parameter, the security parameter is a pre-shared key PSK between a first node and the second node or is a first password, and the first password is an agreed access password between the first node and the second node; and

a processing unit, configured to decrypt the first ciphertext based on the security parameter to obtain the first key negotiation parameter, wherein

the processing unit is further configured to determine a first shared key based on the first key negotiation parameter and a key negotiation algorithm;

the processing unit is further configured to obtain the PSK between the first node and the second node; and

the processing unit is further configured to obtain first identity authentication information based on the first shared key and the PSK between the first node and the second node, wherein the first identity authentication information is used to authenticate an identity of the first node.

21. The apparatus according to claim 20, wherein the processing unit is specifically configured to:

obtain the PSK between the first node and the second node based on a first correspondence; or

determine the PSK between the first node and the second node based on the first password, the first shared key, a first random number, and a second random number, wherein the first message further comprises the first random number.

22. The apparatus according to claim 20 or 21, wherein the first ciphertext is obtained based on a hash value of the security parameter and the first key negotiation parameter; and the processing unit is specifically configured to:

decrypt the first ciphertext based on the hash value of the security parameter to obtain the first key negotiation parameter.

23. The apparatus according to claim 22, wherein the first ciphertext is obtained by performing an elliptic curve point addition operation based on the hash value of the security parameter and the first key negotiation parameter; and the processing unit is specifically configured to:

obtain the first key negotiation parameter by performing an elliptic curve point subtraction operation based on the hash value of the security parameter and the first ciphertext.

24. The apparatus according to claim 22, wherein the processing unit is specifically configured to:

determine a first intermediate key based on the hash value of the security parameter and the first random number; and

decrypt the first ciphertext based on the first intermediate key to obtain the first key negotiation parameter.

25. The apparatus according to any one of claims 20 to 24, wherein the processing unit is specifically configured to:

derive a first key based on the first shared key, the PSK, the first random number, and the second random number; and

generate the first identity authentication information based on the first key, the first random number, and the second random number, wherein the first identity authentication information is used to authenticate the identity of the first node.

26. The apparatus according to any one of claims 20 to 25, wherein the processing unit is further configured to:

encrypt a second key negotiation parameter based on the security parameter to obtain a second ciphertext; and

send a second message to the second node, wherein the second message comprises the first identity authentication information and the second ciphertext, and the second ciphertext is used by the second node to determine the first shared key.

27. The apparatus according to claim 26, wherein the processing unit is specifically configured to:

encrypt the second key negotiation parameter based on the hash value of the security parameter to obtain the second ciphertext; or

obtain the second ciphertext by performing an elliptic curve point addition operation based on the hash value of the security parameter and the second key negotiation parameter; or
determine a second intermediate key based on the hash value of the security parameter and the second random number; and
encrypt the second key negotiation parameter based on the second intermediate key to obtain the second ciphertext.

28. The apparatus according to claim 26 or 27, wherein the processing unit is specifically configured to:

    receive a third message from the second node, wherein the third message comprises second identity authentication information; and
    determine, based on the PSK between the first node and the second node, the first shared key, and the second identity authentication information, that identity authentication of the second node succeeds.

29. A communications apparatus, comprising:

    a sending unit, configured to send a first message to a first node, wherein the first message comprises a first ciphertext, the first ciphertext is obtained based on a security parameter and a first key negotiation parameter, the security parameter is a pre-shared key PSK between the first node and a second node or is a first password, and the first password is an agreed access password between the first node and the second node;
    a receiving unit, configured to receive a second message from the first node, wherein the second message comprises a second ciphertext, and the second ciphertext is obtained by encrypting a second key negotiation parameter based on the security parameter; and
    a processing unit, configured to decrypt the second ciphertext based on the security parameter to obtain the second key negotiation parameter, wherein
    the processing unit is further configured to determine a first shared key based on the second key negotiation parameter and a key negotiation algorithm; and
    the processing unit is further configured to obtain second identity authentication information based on the first shared key and the PSK between the first node and the second node, wherein the second identity authentication information is used to authenticate an identity of the second node.

30. The apparatus according to claim 29, wherein the processing unit is further configured to:
    obtain the PSK between the first node and the second node.

31. The apparatus according to claim 29 or 30, wherein the processing unit is specifically configured to:

    obtain the PSK between the first node and the second node based on a second correspondence; or
    determine the PSK between the first node and the second node based on the first password, the first shared key, a first random number, and a second random number, wherein the first message further comprises the first random number, and the first message comprises the first random number.

32. The apparatus according to any one of claims 29 to 31, wherein the processing unit is further configured to:
    encrypt the first key negotiation parameter based on the security parameter to obtain the first ciphertext.

33. The apparatus according to claim 32, wherein the processing unit is specifically configured to:

    encrypt the first key negotiation parameter based on a hash value of the security parameter to obtain the first ciphertext; or
    obtain the first ciphertext by performing an elliptic curve point addition operation based on a hash value of the security parameter and the first key negotiation parameter; or
    determine a first intermediate key based on a hash value of the security parameter and the first random number; and
    encrypt the first key negotiation parameter based on the first intermediate key to obtain the first ciphertext.

34. The apparatus according to any one of claims 29 to 33, wherein the second ciphertext is obtained based on the hash value of the security parameter and the second key negotiation parameter; and the processing unit is specifically configured to:
    decrypt the second ciphertext based on the hash value of the security parameter to obtain the second key negotiation parameter.

35. The apparatus according to claim 34, wherein the first ciphertext is obtained by performing an elliptic curve point addition operation based on the hash value of the security parameter and the first key negotiation parameter; and the processing unit is specifically configured to:
obtain the second key negotiation parameter by performing an elliptic curve point subtraction operation based on the hash value of the security parameter and the second ciphertext.

36. The apparatus according to claim 34, wherein the processing unit is specifically configured to:

    determine a second intermediate key based on the hash value of the security parameter and the second random number; and
    decrypt the second ciphertext based on the second intermediate key to obtain the second key negotiation parameter.

37. The apparatus according to any one of claims 29 to 36, wherein the processing unit is further configured to:

    derive a first key based on the first shared key, the PSK, the first random number, and the second random number; and
    generate the second identity authentication information based on the first key, the first random number, and the second random number, wherein the second identity authentication information is used to authenticate the identity of the second node.

38. The apparatus according to claim 37, wherein the second message further comprises first identity authentication information; and the processing unit is further configured to:
determine, based on the first identity authentication information, the first shared key, and the PSK, that identity authentication of the first node succeeds.

39. A chip system, wherein the chip system comprises at least one processor and a communications interface, the communications interface is configured to send and/or receive data, and the at least one processor is configured to invoke a computer program stored in at least one memory, so that the chip system implements the method according to any one of claims 1 to 9.

40. A chip system, wherein the chip system comprises at least one processor and a communications interface, the communications interface is configured to send and/or receive data, and the at least one processor is configured to invoke a computer program stored in at least one memory, so that the chip system implements the method according to any one of claims 10 to 19.

41. A computer-readable storage medium, wherein the computer-readable storage medium stores a computer program, and when the computer program is run on a computer, the computer is enabled to perform the method according to any one of claims 1 to 9.

42. A computer-readable storage medium, wherein the computer-readable storage medium stores a computer program, and when the computer program is run on a computer, the computer is enabled to perform the method according to any one of claims 10 to 19.

43. A secure access system, comprising:

    a first node, wherein the first node comprises the communications apparatus according to any one of claims 20 to 28; and
    a second node, wherein the second node comprises the communications apparatus according to any one of claims 29 to 38.

First node | Second node

Determine that there are a prime number
p and a random number g

1: Determine a random number a

2: Generate a first calculated value A,
where $A = g^a \bmod p$

3: Send the first calculated
value A to the first node

4: Determine a random number b

5: The first node obtains a second
calculated value B through calculation,
where $B = g^b \bmod p$

6: Determine a key s, where $s = A^b \bmod p$

7: Send the second calculated
value B to the second node

8: Determine a key s, where $s = B^a \bmod p$

FIG. 1

Curve (curve): a 0    b 7
P: x −1.44225    y 2
Q: x 2.08008    y 4
R = P + Q: x −0.31543    y −2.63982

Elliptic curve: $y^2 = x^3 + 7$

FIG. 2(a)

Curve (curve): | a | 0 | | b | 7 |

P: | x | 1 | | y | 2.82843 |

Q: | x | 1 | | y | 2.82843 |

R = P + Q = 2P: | x | −1.71875 | | y | −1.3866 |

Elliptic curve: $y^2 = x^3 + 7$

FIG. 2(b)

Curve (curve): a 0    b 7

R ( 2P): x −1.71875    y −1.38659

−P: x 1    y −2.82843

P = R−P : x 1    y 2.82843

Elliptic curve: $y^2 = x^3 + 7$

FIG. 2(c)

EP 4 254 861 A1

FIG. 3

FIG. 4

```
┌─────────────┐                                    ┌─────────────┐
│ First node  │                                    │ Second node │
└──────┬──────┘                                    └──────┬──────┘
       │         Access message/broadcast message         │
       │ - - - - - - - - - - - - - - - - - - - - - - - - >│
       │        S501: Send a first message to the first node
       │ <───────────────────────────────────────────────│
       │                (first ciphertext)                │
```

┌────────────────────────────────────┐
│ S502: Decrypt the first ciphertext based │
│ on a security parameter to obtain a first │
│ key negotiation parameter │
└────────────────────────────────────┘

┌────────────────────────────────────┐
│ S503: Determine a first shared key based │
│ on the first key negotiation parameter │
│ and a key negotiation algorithm │
└────────────────────────────────────┘

┌────────────────────────────────────┐
│ S504: Obtain a PSK between the first │
│ node and the second node │
└────────────────────────────────────┘

┌────────────────────────────────────┐
│ S505: Obtain first identity authentication │
│ information based on the first shared key │
│ and the PSK │
└────────────────────────────────────┘

```
       │     S506: Send a second message to the second node
       │ ───────────────────────────────────────────────>│
       │               (second ciphertext)               │
```

┌────────────────────────────────────┐
│ S507: Decrypt the second ciphertext based │
│ on the security parameter to obtain a │
│ second key negotiation parameter │
└────────────────────────────────────┘

┌────────────────────────────────────┐
│ S508: Determine the first shared key based │
│ on the second key negotiation parameter │
│ and the key negotiation algorithm │
└────────────────────────────────────┘

┌────────────────────────────────────┐
│ S509: Obtain second identity │
│ authentication information based on the │
│ first shared key and the PSK │
└────────────────────────────────────┘

FIG. 5

```
                    Input a first key
                      negotiation
   Start             parameter KEt
                    (KEt = g^b mod p)


               Determine a random number a, and
                    obtain a public key p


               Calculate an exchange key K_KE
               (K_KE = KEt^a mod p = g^ab mod p)


                    Output the exchange
                       key K_KE
```

(a) Based on a DH algorithm

```
                    Input a first key
                      negotiation
   Start             parameter KEt
                    (KEt = b x G)


               Determine a random number a,
               and determine an elliptic curve


               Calculate an exchange key K_KE
                (K_KE = a × KEt = ab × G)


                    Output the exchange
                       key K_KE
```

(b) Based on an ECDH algorithm

FIG. 6

FIG. 7

First node

Second node

Access message or broadcast message
(identity of the first node)

S801: Encrypt a first key negotiation parameter based on a security parameter to obtain a first ciphertext

S802: Send a first message to the first node

(identity of the second node, first ciphertext, and first fresh parameter)

S803: Decrypt the first ciphertext to obtain the first key negotiation parameter

S804: Encrypt a second key negotiation parameter based on the security parameter to obtain a second ciphertext

S805: Determine a first shared key based on a key negotiation algorithm, the first key negotiation parameter, the first fresh parameter, and a second fresh parameter

S806: Determine an identity authentication key based on the first shared key and/or a PSK between the first node and the second node

S807: Determine first identity authentication information based on the identity authentication key and at least one of the first message and a second message

S808: Send the second message to the second node

(second ciphertext, second fresh parameter, and first identity authentication information)

TO
FIG. 8B

TO
FIG. 8B

FIG. 8A

CONT.
FROM
FIG. 8A

CONT.
FROM
FIG. 8A

S809: Decrypt the second ciphertext to obtain the second key negotiation parameter

S810: Determine the first shared key based on the key negotiation algorithm, the first key negotiation parameter, the first fresh parameter, and the second fresh parameter

S811: Determine an identity authentication key based on the first shared key and the PSK between the first node and the second node

S812: Check the first identity authentication information based on the identity authentication key and at least one of the first message and the second message

S813: Determine second identity authentication information based on the identity authentication key and at least one of the first message, the second message, and a third message

S814: Send the third message to the first node

(second identity authentication information)

S815: Check the second identity authentication information based on the identity authentication key and at least one of the first message, the second message, and the third message

S816: Send a fourth message to the second node

(indicating that an association is established with the second node)

FIG. 8B

| Second node | First node |
|---|---|

First key negotiation
parameter KEt
$(KEt = a \times G)$

| C1 | NONCEt | ... |

First message

Private
key a

Base
point G

901

| C1 | NONCEt | ... |

First key negotiation
parameter KEt

901

TO
FIG. 9B

TO
FIG. 9B

TO
FIG. 9B

FIG. 9A

EP 4 254 861 A1

| Private key b | First key negotiation parameter KEt |
|---|---|

Exchange key $K_{KE}$

| Exchange key $K_{KE}$ | Parameter NOCNEt | Parameter NOCNEg |
|---|---|---|

Determine a shared key Kgt

| Shared key | Password pw | Identity IDt | Identity IDg | Parameter NOCNEt | Parameter NOCNEg |
|---|---|---|---|---|---|

Determine a pre-shared key PSK

| Shared key | PSK | Identity IDt | Identity IDg | Parameter NOCNEt | Parameter NOCNEg |
|---|---|---|---|---|---|

Determine an identity authentication key

| Identity authentication key | First message | Some parameters in a second message |
|---|---|---|

Determine first identity authentication information AUTHg

FIG. 9B

CONT.
FROM
FIG. 9B

CONT.
FROM
FIG. 9B

CONT.
FROM
FIG. 9B

| C2 | NONCEg | | ... |

First message

Second key
negotiation
parameter KEg

902

| C2 | NONCEg | AUTHg | ... |

Second key
negotiation
parameter KEg
$(KEg = b \times G)$

902

Private
key b

Base
point G

EP 4 254 861 A1

FIG. 9C

CONT.
FROM
FIG. 9C

CONT.
FROM
FIG. 9C

CONT.
FROM
FIG. 9C

| Private key a | Second key negotiation parameter KEg |
|---|---|

Exchange key $K_{KE}$

| Exchange key $K_{KE}$ | Parameter NOCNEt | Parameter NOCNEg |
|---|---|---|

Determine a shared key Kgt

| Shared key | Password pw | Identity IDt | Identity IDg | Parameter NOCNEt | Parameter NOCNEg |
|---|---|---|---|---|---|

Determine a pre-shared key PSK

| Shared key | PSK | Identity IDt | Identity IDg | Parameter NOCNEt | Parameter NOCNEg |
|---|---|---|---|---|---|

Determine an identity authentication key

| Identity authentication key | First message | Some parameters in the second message |
|---|---|---|

Check the first identity authentication information AUTHg

| Identity authentication key | First message | Second message | Third message | Key negotiation algorithm capability |
|---|---|---|---|---|

Determine second identity authentication information AUTHt

FIG. 9D

EP 4 254 861 A1

CONT.
FROM
FIG. 9D

CONT.
FROM
FIG. 9D

CONT.
FROM
FIG. 9D

903

Third message

AUTHt | ...

AUTHt | ...

904

| Identity authentication key | First message | Second message | Third message | Key negotiation algorithm capability |

Check the second identity authentication information AUTHt

FIG. 9E

100

Communications apparatus

1001

1002

1003

Receiving
unit

Processing
unit

Sending
unit

FIG. 10

110

Communications apparatus

1101

1102

1103

Sending
unit

Receiving
unit

Processing
unit

FIG. 11

120

Communications apparatus

1201

Memory

1202

Processor

1203

1204

Communications
interface

FIG. 12

<div align="center">

**INTERNATIONAL SEARCH REPORT**

</div>

| International application No. |
|---|
| **PCT/CN2020/139154** |

| A. | CLASSIFICATION OF SUBJECT MATTER |
|---|---|

H04L 29/06(2006.01)i

According to International Patent Classification (IPC) or to both national classification and IPC

| B. | FIELDS SEARCHED |
|---|---|

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, CNKI, WPI, EPODOC: 安全, 接入, 身份, 认证, 密文, 密钥, 协商, 参数, 口令, 算法, PSK, security, access, identity, authentication, ciphertext, key, negotiation, parameter, password, algorithm

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 108574569 A (RESEARCH INSTITUTE OF CHINA MOBILE COMMUNICATIONS CORPORATION et al.) 25 September 2018 (2018-09-25) description paragraphs [0212]-[0279], claims 1-21 | 1-43 |
| A | CN 104935426 A (HUAWEI TECHNOLOGIES CO., LTD.) 23 September 2015 (2015-09-23) entire document | 1-43 |
| A | CN 110572800 A (PLA STRATEGIC SUPPORT FORCE INFORMATION ENGINEERING UNIVERSITY) 13 December 2019 (2019-12-13) entire document | 1-43 |
| A | US 2003033518 A1 (FACCIN, Stefano M. et al.) 13 February 2003 (2003-02-13) entire document | 1-43 |
| A | US 2008313455 A1 (NOKIA SIEMENS NETWORKS OY) 18 December 2008 (2008-12-18) entire document | 1-43 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 September 2021** | **24 September 2021** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/139154**

| Patent document cited in search report | | | Publication date (day/month/year) | Patent family member(s) | | | Publication date (day/month/year) |
|---|---|---|---|---|---|---|---|
| CN | 108574569 | A | 25 September 2018 | None | | | |
| CN | 104935426 | A | 23 September 2015 | WO | 2015139622 | A1 | 24 September 2015 |
| CN | 110572800 | A | 13 December 2019 | None | | | |
| US | 2003033518 | A1 | 13 February 2003 | WO | 03014935 | A1 | 20 February 2003 |
| | | | | AU | 2002324256 | A1 | 24 February 2003 |
| US | 2008313455 | A1 | 18 December 2008 | None | | | |

Form PCT/ISA/210 (patent family annex) (January 2015)